# EUROPEAN PATENT APPLICATION

(11) **EP 3 780 625 A1**
(43) Date of publication of application: **17.02.2021**
(21) Application number: 19785368.2
(22) Date of filing: 18.03.2019
(51) Int. Cl.: H04N 21/231

(54) **RECORDED DATA PROCESSING METHOD AND RELEVANT DEVICE**

(30) Priority: 10.04.2018 CN 201810323311
(71) Applicant: HUAWEI TECHNOLOGIES CO., LTD., Shenzhen, Guangdong 518129 (CN)
(72) Inventor: CHEN, Hui, Shenzhen, Guangdong 518129 (CN); WANG, Zhaohuai, Shenzhen, Guangdong 518129 (CN); LI, Shange, Shenzhen, Guangdong 518129 (CN); LI, Bo, Shenzhen, Guangdong 518129 (CN); ZHANG, Guanhua, Shenzhen, Guangdong 518129 (CN)
(74) Representative: Epping - Hermann - Fischer
(86) International application number: PCT/CN2019/078442
(87) International publication number: WO 2019/196597

(57) **Abstract**

Embodiments of the present invention provide a recorded data processing method and a related device. The method includes: when a first user initiates a private recording task for recording a first clip in first content, privately recording the first clip in the first content to generate a first private file, and performing shared recording on the first clip in the first content to generate a first shared file; and when a uniform resource locator URL1 of the first private file is not operated in a preset time period, instructing, by a recording management server, to delete the first private file, and publishing, to a content playback server, a uniform resource locator URL2 corresponding to a first clip in the first shared file, to reduce storage space occupied by a private file and save storage space.

## Description

This application claims priority to Chinese Patent Application No. 201810323311, filed with the China National Intellectual Property Administration on April 10, 2018 and entitled "RECORDED DATA PROCESSING METHOD AND RELATED DEVICE", which is incorporated herein by reference in its entirety.

### TECHNICAL FIELD

The present invention relates to the field of communications technologies, and in particular, to a recorded data processing method and a related device.

### BACKGROUND

A video service of an operator provides a private recording service. To be specific, a user may store a television program of the user's interest on a storage server of the operator. The user needs to enter, by using an operation interface provided by an access device (which is usually a terminal such as a set-top box), a channel and a time period in which the user expects to perform recording. The access device sends a request of the user to a recording management server. In the time period in which the user expects to perform recording, the recording management server instructs a content recording server to separately record a copy of content of a program in the channel for the user and store the content in a content storage device. The user performs on-demand playback at an appropriate time. A related law requires that a recorded file of a user be separately stored for the user.

For a popular video program, for example, a football world cup or a popular television series, a user usually chooses to record the video program and then watch it. If a large quantity of users choose recording, many storage resources are occupied. Using a channel with 8M bandwidth as an example, if 10,000 users privately record two continuously played episodes (with duration of approximately 1.5 hours) of a popular television series played at weekends, storage space of 51.5 TB needs to be occupied, and the occupied storage space is relatively large.

### SUMMARY

Embodiments of the present invention provide a recorded data processing method. When a URL1 of a first private file is not operated in a preset time period, the first private file is deleted, and a uniform resource locator URL2 corresponding to a first clip in a first shared file is published to a content playback server, to reduce storage space occupied by a private file and save storage space.

According to a first aspect, an embodiment of the present invention provides a recorded data processing method, applied to a recording management server. The method includes: when receiving a first private recording task, sent by a first terminal, for recording a first clip in first content, responding, by the recording management server, to the first private recording task, where the first private recording task carries an identity of the first clip in the first content and an identity of a first user account, and is used to request to privately record the first clip in the first content to generate a first private file; when a uniform resource locator URL1 of the first private file is not operated in a preset time period, generating, by the recording management server, a private-to-public request for the URL1, and sending the request to a first content recording server, where the private-to-public request is used to instruct the first content recording server to delete the first private file and send, to the recording management server, a uniform resource locator URL2 of a first clip in a first shared file including the first clip in the first content; and receiving, by the recording management server, the URL2, and publishing first recording information that carries the URL2 and the identity of the first user account to a content playback server, so that after receiving the first recording information, the content playback server provides the URL2 for a terminal to which the first user account has logged in.

Compared with the prior art, in the foregoing recorded data processing method, when a first user initiates a private recording task for recording the first clip in the first content, private recording is performed on the first clip in the first content to generate the first private file, and shared recording is performed on the first clip in the first content to generate the first shared file; and when the uniform resource locator URL1 of the first private file is not operated in the preset time period, the recording management server instructs to delete the first private file, and publishes, to the content playback server, the uniform resource locator URL2 corresponding to the first clip in the first shared file, to reduce storage space occupied by a private file and save storage space.

Optionally, the URL2 includes an identity of the first content and information about a location of the first clip in the first content.

In a possible implementation, an implementation of responding, by the recording management server, to the first private recording task may be:
sending, by the recording management server to the first content recording server, a private recording request for the first private recording task, where the private recording request is used to instruct the first content recording server to privately record the first clip in the first content according to the private recording request, generate the first private file including the first clip in the first content, and send the uniform resource locator URL1 of the first private file to the recording management server; and
receiving, by the recording management server, the URL1, and publishing second recording information that carries the URL1 and the identity of the first user account to the content playback server, where the second recording information is used for the content playback server to provide the URL1 for the terminal to which the first user account has logged in.

In another possible implementation, after the receiving, by the recording management server, the URL2, and publishing first recording information that carries the URL2 and the identity of the first user account to a content playback server, the method may further include:
receiving, by the recording management server, a uniform resource locator URL3, sent by the first content recording server, of a second private file, where the second private file is generated by copying data corresponding to the first clip in the first shared file by the first content recording server according to a received first public-to-private request that carries the URL2; and
publishing, by the recording management server, third recording information that carries the URL3 and the identity of the first user account to the content playback server, where the third recording information is used for the content playback server to provide the URL3 for the terminal to which the first user account has logged in.

In this embodiment of the present invention, when a first terminal requests to access data corresponding to the URL2, the content playback server sends the first public-to-private request that carries the URL2 to the first content recording server, to request to generate the second private file by copying the data corresponding to the first clip in the first shared file, so that the terminal can properly access the recorded data.

In another possible implementation, before the publishing, by the recording management server, third recording information that carries the URL3 and the identity of the first user account to the content playback server, the method further includes:
receiving, by the recording management server, a uniform resource locator URL4, sent by a second content recording server, of a third private file, where the third private file is generated by copying the data corresponding to the first clip in the first shared file by the second content recording server according to a received second public-to-private request that carries the URL4; and
when the URL4 meets a first condition, sending a first deletion request that carries the URL4 to the second content recording server, where the first deletion request is used to instruct the second content recording server to delete the third private file.

In this embodiment of the present invention, when a plurality of terminals (for example, the first terminal and a second terminal) to which the first user account has logged in simultaneously request to access the data corresponding to the URL2, each content recording server that responds to an access request for the URL2 generates a private file including the first clip in the first content. To avoid repeated storage of a private file, duplicate private files on some content recording servers are deleted, to further reduce storage space occupied by a private file.

In another possible implementation, the method may further include: determining, by the recording management server based on received private recording tasks for recording a clip in the first content that are respectively sent by a plurality of terminals, that the first content does not include a non-overlapping clip of any one of clips corresponding to the private recording tasks; and sending, by the recording management server to a third content recording server, a second deletion request for the non-overlapping clip, where the second deletion request is used to instruct the third content recording server to delete data that is corresponding to the non-overlapping clip and that is in the first shared file, so as to reduce storage of unnecessary data in a shared file and further reduce occupied storage space.

According to a second aspect, an embodiment of the present invention further provides a recorded data processing method, applied to a content recording server. The method includes: when receiving a private recording request that is for a first recording task and that is sent by a recording management server, privately recording, by the content recording server, a first clip in first content to generate a first private file, where the first private recording task carries an identity of the first clip in the first content and an identity of a first user account; when a uniform resource locator URL1 of the first private file is not operated in a preset time period, receiving, by the content recording server, a private-to-public request that carries the uniform resource locator URL1 of the first private file and that is sent by the recording management server, deleting the first private file according to the private-to-public request, and sending a uniform resource locator URL2 of a first clip in a first shared file to the recording management server, so that the recording management server publishes first recording information that carries the URL2 and the identity of the first user account to a content playback server, and then the content playback server provides the URL2 for a terminal to which the first user account has logged in.

Compared with the prior art, in the foregoing recorded data processing method, when a first user initiates a private recording task for recording the first clip in the first content, private recording is performed on the first clip in the first content to generate the first private file, and shared recording is performed on the first clip in the first content to generate the first shared file; and when the uniform resource locator URL1 of the first private file is not operated in the preset time period, the content recording server deletes the first private file, to reduce storage space occupied by a private file and save storage space.

In a possible implementation, after the privately recording, by the content recording server, a first clip in first content to generate a first private file, and before the receiving a private-to-public request that carries the uniform resource locator URL 1 of the first private file and that is sent by the recording management server, the method may further include:
sending, by the content recording server, the uniform resource locator URL1 of the first private file to the recording management server, so that after receiving the URL1, the recording management server publishes second recording information that carries the URL1 and the identity of the first user account to the content playback server, where the second recording information is used for the content playback server to provide the URL1 for the terminal to which the first user account has logged in.

In another possible implementation, the method may further include: receiving, by the content recording server, a public-to-private request that carries the URL2 and that is sent by the content playback server; generating, according to the public-to-private request, a second private file by copying data corresponding to the first clip in the first shared file; and sending the second private file to the content playback server.

In this embodiment of the present invention, when a first terminal requests to access data corresponding to the URL2, the content recording server generates the second private file by copying the data corresponding to the first clip in the first shared file, so that the terminal can properly access the recorded data.

In another possible implementation, after the generating, by the content recording server according to the public-to-private request, a second private file by copying data corresponding to the first clip in the first shared file, the method may further include: sending, by the content recording server, third recording information that carries a URL3 and the identity of the first user account to the recording management server, so that the recording management server publishes the third recording information that carries the URL2 and the identity of the first user account to the content playback server, and then the content playback server provides the URL3 for the terminal to which the first user account has logged in.

In this embodiment of the present invention, when a first terminal requests to access data corresponding to the URL2, the content playback server may send a first public-to-private request that carries the URL2 to a first content recording server, to request to generate the second private file by copying the data corresponding to the first clip in the first shared file, so that the terminal can properly access the recorded data.

According to a third aspect, an embodiment of the present invention further provides a recorded data processing method, applied to a content playback server. The method includes: receiving, by the content playback server, first recording information that carries a uniform resource locator URL2 of a first clip in a first shared file and an identity of a first user account and that is published by a recording management server; and sending, based on the first recording information, the URL2 to a terminal to which the first user account has logged in, where the first recording information is information published by the recording management server to the content playback server after the recording management server instructs, when a uniform resource locator URL1 of a first private file is not operated in a preset time period, a content recording server to delete the first private file, and the first private file is a private file generated by recording a first clip in first content by the content recording server according to a received recording request for recording the first clip in the first content.

Compared with the prior art, in the foregoing recorded data processing method, when a first user initiates a private recording task for recording the first clip in the first content, private recording is performed on the first clip in the first content to generate the first private file, and shared recording is performed on the first clip in the first content to generate the first shared file; and when the uniform resource locator URL1 of the first private file is not operated in the preset time period, the content recording server deletes the first private file, to reduce storage space occupied by a private file and save storage space.

In a possible implementation, before the receiving, by the content playback server, first recording information that carries a uniform resource locator URL2 of a first clip in a first shared file and an identity of a first user account and that is published by a recording management server, the method further includes: receiving, by the content playback server, second recording information that carries the uniform resource locator URL1 of the first private file and the identity of the first user account and that is published by the recording management server.

In another possible implementation, the method further includes: receiving, by the content playback server, a first access request that is for the URL2 and that is sent by a first terminal; and identifying, according to the first access request, that the first shared file corresponding to the URL2 is a shared file, and sending a public-to-private request that carries the URL2 to the content recording server, so that the content recording server receives the public-to-private request, generates, according to the public-to-private request, a second private file by copying data corresponding to the first clip in the first shared file, and sends the second private file to the content playback server.

According to a fourth aspect, an embodiment of the present invention further provides a recording management server. The recording management server includes a processing unit and a communications unit, where
the processing unit is configured to: when a first private recording task, sent by a first terminal, for recording a first clip in first content is received, respond to the first private recording task, where the first private recording task carries an identity of the first clip in the first content and an identity of a first user account, and is used to request to privately record the first clip in the first content to generate a first private file; and
when a uniform resource locator URL1 of the first private file is not operated in a preset time period, generate a private-to-public request for the URL1, and send the request to a first content recording server, where the private-to-public request is used to instruct the first content recording server to delete the first private file and send, to the recording management server, a uniform resource locator URL2 of a first clip in a first shared file including the first clip in the first content; and
the communications unit is configured to: receive the URL2, and publish first recording information that carries the URL2 and the identity of the first user account to a content playback server, where the first recording information is used for the content playback server to provide the URL2 for a terminal to which the first user account has logged in.

Optionally, the URL2 includes an identity of the first content and information about a location of the first clip in the first content.

In a possible implementation, the communications unit is further configured to:
send, to the first content recording server, a private recording request for the first private recording task, where the private recording request is used to instruct the first content recording server to privately record the first clip in the first content according to the private recording request, generate the first private file including the first clip in the first content, and send the uniform resource locator URL1 of the first private file to the recording management server; and
receive the URL1, and publish second recording information that carries the URL1 and the identity of the first user account to the content playback server, where the second recording information is used for the content playback server to provide the URL1 for the terminal to which the first user account has logged in.

In another possible implementation, the communications unit is further configured to:
after the communications unit receives the URL2 and publishes the first recording information that carries the URL2 and the identity of the first user account to the content playback server, receive a uniform resource locator URL3, sent by the first content recording server, of a second private file, where the second private file is generated by copying data corresponding to the first clip in the first shared file by the first content recording server according to a received first public-to-private request that carries the URL2; and
publish third recording information that carries the URL3 and the identity of the first user account to the content playback server, where the third recording information is used for the content playback server to provide the URL3 for the terminal to which the first user account has logged in.

In another possible implementation, the communications unit is further configured to:
before the communications unit publishes the third recording information that carries the URL3 and the identity of the first user account to the content playback server, receive a uniform resource locator URL4, sent by the second content recording server, of a third private file, where the third private file is generated by copying the data corresponding to the first clip in the first shared file by the second content recording server according to a received second public-to-private request that carries the URL4; and
when the URL4 meets a first condition, send a first deletion request that carries the URL4 to the second content recording server, where the first deletion request is used to instruct the second content recording server to delete the third private file.

In another possible implementation, the processing unit is further configured to determine, based on received private recording tasks for recording a clip in the first content that are respectively sent by a plurality of terminals, that the first content does not include a non-overlapping clip of any one of clips corresponding to the private recording tasks; and
the communications unit is further configured to send, to a third content recording server, a second deletion request for the non-overlapping clip, where the second deletion request is used to instruct the third content recording server to delete data that is corresponding to the non-overlapping clip and that is in the first shared file.

According to a fifth aspect, an embodiment of the present invention further provides a content recording server. The content recording server includes a processing unit and a communications unit, where
the processing unit is configured to: when a private recording request that is for a first recording task and that is sent by a recording management server is received, privately recording a first clip in first content, and generate a first private file, where the first private recording task carries an identity of the first clip in the first content and an identity of a first user account; and
the communications unit is configured to: receive a private-to-public request that carries a uniform resource locator URL1 of the first private file and that is sent by the recording management server, delete the first private file according to the private-to-public request, and send a uniform resource locator URL2 of a first clip in the first shared file to the recording management server, so that the recording management server publishes first recording information that carries the URL2 and the identity of the first user account to a content playback server, where
the private-to-public request is a request generated by the recording management server and sent by the recording management server to the content recording server when the uniform resource locator URL1 of the first private file is not operated in a preset time period; and
the first recording information is used for the content playback server to provide the URL2 for a terminal to which the first user account has logged in.

In a possible implementation, the communications unit is further configured to: after the processing unit privately records the first clip in the first content and generates the first private file, and before the communications unit receives the private-to-public request that carries the uniform resource locator URL1 of the first private file and that is sent by the recording management server, send the uniform resource locator URL1 of the first private file to the recording management server, so that after receiving the URL 1, the recording management server publishes second recording information that carries the URL1 and the identity of the first user account to the content playback server, where the second recording information is used for the content playback server to provide the URL1 for the terminal to which the first user account has logged in.

In another possible implementation, the communications unit is further configured to receive a public-to-private request that carries the URL2 and that is sent by the content playback server;
the processing unit is further configured to generate, according to the public-to-private request, a second private file by copying data corresponding to the first clip in the first shared file; and
the communications unit is further configured to send the second private file to the content playback server.

In another possible implementation, the communications unit is further configured to: after the processing unit generates, according to the public-to-private request, the second private file by copying the data corresponding to the first clip in the first shared file, send third recording information that carries the URL3 and the identity of the first user account to the recording management server, so that the recording management server publishes the third recording information that carries the URL2 and the identity of the first user account to the content playback server, where the third recording information is used for the content playback server to provide the URL3 for the terminal to which the first user account has logged in.

According to a sixth aspect, an embodiment of the present invention further provides a content playback server. The content playback server includes a communications unit. The communications unit is configured to:
receive first recording information that carries a uniform resource locator URL2 of a first clip in a first shared file and an identity of the first user account and that is published by a recording management server; and
send, based on the first recording information, the URL2 to a terminal to which the first user account has logged in, where
the first recording information is information published by the recording management server to the content playback server after the recording management server instructs, when a uniform resource locator URL1 of a first private file is not operated in a preset time period, the content recording server to delete the first private file; and
the first private file is a private file generated by recording a first clip in first content by the content recording server according to a received recording request for recording the first clip in the first content.

In a possible implementation, the communications unit is further configured to: before receiving the first recording information that carries the uniform resource locator URL2 of the first clip in the first shared file and the identity of the first user account and that is published by the recording management server, receive second recording information that carries the uniform resource locator URL1 of the first private file and the identity of the first user account and that is published by the recording management server.

In another possible implementation, the communications unit is further configured to receive a first access request that is for the URL2 and that is sent by a first terminal;
the content playback server further includes a processing unit, where the processing unit is configured to identify, according to the first access request, that the first shared file corresponding to the URL2 is a shared file; and
the communications unit is further configured to send a public-to-private request that carries the URL2 to the content recording server, so that the content recording server receives the public-to-private request, generates, according to the public-to-private request, a second private file by copying data corresponding to the first clip in the first shared file, and sends the second private file to the content playback server.

According to a seventh aspect, an embodiment of the present invention further provides a recording management server. The recording management server includes a processor, a memory, and a communications interface. The processor is connected to the memory and the communications interface by using a bus, and the processor is configured to invoke program code stored in the memory to perform the following operations:
when a first private recording task, sent by a first terminal, for recording a first clip in first content is received, responding to the first private recording task, where the first private recording task carries an identity of the first clip in the first content and an identity of a first user account, and is used to request to privately record the first clip in the first content to generate a first private file;
when a uniform resource locator URL1 of the first private file is not operated in a preset time period, generating a private-to-public request for the URL1, and sending the request to a first content recording server, where the private-to-public request is used to instruct the first content recording server to delete the first private file and send, to the recording management server, a uniform resource locator URL2 of a first clip in a first shared file including the first clip in the first content; and
receiving the URL2 by using the communications interface, and publishing first recording information that carries the URL2 and the identity of the first user account to a content playback server, where the first recording information is used for the content playback server to provide the URL2 for a terminal to which the first user account has logged in.

Optionally, the URL2 includes an identity of the first content and information about a location of the first clip in the first content.

In a possible implementation, the responding, by the processor, to the first private recording task specifically includes:
sending, to the first content recording server by using the communications interface, a private recording request for the first private recording task, where the private recording request is used to instruct the first content recording server to privately record the first clip in the first content according to the private recording request, generate the first private file including the first clip in the first content, and send the uniform resource locator URL1 of the first private file to the recording management server; and
receiving the URL1 by using the communications interface, and publishing second recording information that carries the URL1 and the identity of the first user account to the content playback server, where the second recording information is used for the content playback server to provide the URL1 for the terminal to which the first user account has logged in.

In another possible implementation, after receiving the URL2 by using the communications interface and publishing the first recording information that carries the URL2 and the identity of the first user account to the content playback server, the processor is further configured to perform the following operations:
receiving, by using the communications interface, a uniform resource locator URL3, sent by the first content recording server, of a second private file, where the second private file is generated by copying data corresponding to the first clip in the first shared file by the first content recording server according to a received first public-to-private request that carries the URL2; and
publishing, by using the communications interface, third recording information that carries the URL3 and the identity of the first user account to the content playback server, where the third recording information is used for the content playback server to provide the URL3 for the terminal to which the first user account has logged in.

In another possible implementation, before publishing, by using the communications interface, the third recording information that carries the URL3 and the identity of the first user account to the content playback server, the processor 61 is further configured to perform the following operations:
receiving, by using the communications interface, a uniform resource locator URL4, sent by the second content recording server, of a third private file, where the third private file is generated by copying the data corresponding to the first clip in the first shared file by the second content recording server according to a received second public-to-private request that carries the URL4; and
when the URL4 meets a first condition, sending, by using the communications interface, a first deletion request that carries the URL4 to the second content recording server, where the first deletion request is used to instruct the second content recording server to delete the third private file.

In a possible implementation, the processor is further configured to:
determine, based on received private recording tasks for recording a clip in the first content that are respectively sent by a plurality of terminals, that the first content does not include a non-overlapping clip of any one of clips corresponding to the private recording tasks; and
send, to a third content recording server by using the communications interface, a second deletion request for the non-overlapping clip, where the second deletion request is used to instruct the third content recording server to delete data that is corresponding to the non-overlapping clip and that is in the first shared file.

According to an eighth aspect, an embodiment of the present invention further provides a content recording server, including a processor, a memory, and a communications interface. The processor is connected to the memory and the communications interface by using a bus, and the processor is configured to invoke program code stored in the memory to perform the following operations:
when a private recording request that is for a first recording task and that is sent by a recording management server is received, privately recording a first clip in first content to generate a first private file, where the first private recording task carries an identity of the first clip in the first content and an identity of a first user account; and
when a uniform resource locator URL1 of the first private file is not operated in a preset time period, receiving, by using the communications interface 83, a private-to-public request that carries the uniform resource locator URL1 of the first private file and that is sent by the recording management server, deleting the first private file according to the private-to-public request, and sending a uniform resource locator URL2 of a first clip in the first shared file to the recording management server, so that the recording management server publishes first recording information that carries the URL2 and the identity of the first user account to a content playback server, where
the first recording information is used for the content playback server to provide the URL2 for a terminal to which the first user account has logged in.

In a possible implementation, after privately recording the first clip in the first content to generate the first private file, and before receiving, by using the communications interface, the private-to-public request that carries the uniform resource locator URL1 of the first private file and that is sent by the recording management server, the processor is further configured to perform the following operation:
sending the uniform resource locator URL1 of the first private file to the recording management server by using the communications interface, so that after receiving the URL1, the recording management server publishes second recording information that carries the URL1 and the identity of the first user account to the content playback server, where the second recording information is used for the content playback server to provide the URL1 for the terminal to which the first user account has logged in.

In another possible implementation, the processor is further configured to:
receive, by using the communications interface, a public-to-private request that carries the URL2 and that is sent by the content playback server;
generate, according to the public-to-private request, a second private file by copying data corresponding to the first clip in the first shared file; and
send the second private file to the content playback server by using the communications interface.

In another possible implementation, after generating, according to the public-to-private request, the second private file by copying the data corresponding to the first clip in the first shared file, the processor is further configured to perform the following operation:
sending, by using the communications interface, third recording information that carries the URL3 and the identity of the first user account to the recording management server, so that the recording management server publishes the third recording information that carries the URL2 and the identity of the first user account to the content playback server, where the third recording information is used for the content playback server to provide the URL3 for the terminal to which the first user account has logged in.

According to a ninth aspect, an embodiment of the present invention further provides a content playback server, including a processor, a memory, and a communications interface. The processor is connected to the memory and the communications interface by using a bus, and the processor is configured to invoke program code stored in the memory to perform the following operations:
receiving, by using the communications interface, first recording information that carries a uniform resource locator URL2 of a first clip in a first shared file and an identity of the first user account and that is published by a recording management server; and
sending, by using the communications interface and based on the first recording information, the URL2 to a terminal to which the first user account has logged in, where
the first recording information is information published by the recording management server to the content playback server after the recording management server instructs, when a uniform resource locator URL1 of a first private file is not operated in a preset time period, the content recording server to delete the first private file; and
the first private file is a private file generated by recording a first clip in first content by the content recording server according to a received recording request for recording the first clip in the first content.

In a possible implementation, before receiving, by using the communications interface, the first recording information that carries the uniform resource locator URL2 of the first clip in the first shared file and the identity of the first user account and that is published by a recording management server, the processor is further configured to perform the following operation:
receiving, by using the communications interface, second recording information that carries the uniform resource locator URL1 of the first private file and the identity of the first user account and that is published by the recording management server.

In another possible implementation, the processor is further configured to:
receive, by using the communications interface, a first access request that is for the URL2 and that is sent by a first terminal;
identify, according to the first access request, that the first shared file corresponding to the URL2 is a shared file; and
send, by using the communications interface, a public-to-private request that carries the URL2 to the content recording server, so that the content recording server receives the public-to-private request, generates, according to the public-to-private request, a second private file by copying data corresponding to the first clip in the first shared file, and sends the second private file to the content playback server.

According to a tenth aspect, an embodiment of the present invention provides a recorded data processing method. The method includes:
when receiving a first private recording task, sent by a first terminal, for recording a first clip in first content, responding, by a recording management server, to the first private recording task, where the first private recording task carries an identity of the first clip in the first content and an identity of a first user account, and is used to request to privately record the first clip in the first content to generate a first private file;
when a uniform resource locator URL1 of the first private file is not operated in a preset time period, generating, by the recording management server, a private-to-public request for the URL1, and sending the request to a first content recording server; and
receiving, by the first content recording server, the private-to-public request, deleting the first private file according to the private-to-public request, and sending, to the recording management server, a uniform resource locator URL2 of a first clip in a first shared file including the first clip in the first content;
receiving, by the recording management server, the URL2, and publishing first recording information that carries the URL2 and the identity of the first user account to a content playback server; and
receiving, by the content playback server, the first recording information, and providing the URL2 for a terminal to which the first user account has logged in.

In a possible implementation, the responding, by a recording management server, to the first private recording task includes:
sending, by the recording management server to the first content recording server, a private recording request for the first private recording task;
receiving, by the first content recording server, the private recording request, privately recording the first clip in the first content according to the private recording request, generating the first private file including the first clip in the first content, and sending the uniform resource locator URL1 of the first private file to the recording management server;
receiving, by the recording management server, the URL1, and publishing second recording information that carries the URL1 and the identity of the first user account to the content playback server; and
receiving, by the content playback server, the second recording information, and providing the URL1 for the terminal to which the first user account has logged in.

In another possible implementation, after the receiving, by the recording management server, the URL2, and publishing first recording information that carries the URL2 and the identity of the first user account to a content playback server, the method further includes:
receiving, by a first content playback server, a first access request that is for the URL2 and that is sent by the first terminal, identifying, according to the first access request, that the first shared file corresponding to the URL2 is a shared file, and sending a first public-to-private request that carries the URL2 to the first content recording server;
receiving, by the first content recording server, the public-to-private request, generating, according to the public-to-private request, a second private file by copying data corresponding to the first clip in the first shared file, and sending the second private file to the first content playback server; and
sending, by the first content playback server, the second private file to the first terminal.

Optionally, after the receiving, by the first content recording server, the public-to-private request, and generating, according to the public-to-private request, a second private file by copying data corresponding to the first clip in the first shared file, the method may further include:
sending, by the first content recording server, a uniform resource locator URL3 of the second private file to the recording management server;
receiving, by the recording management server, the URL3, and publishing third recording information that carries the URL3 and the identity of the first user account to the content playback server; and
receiving, by the content playback server, the third recording information, and providing the URL3 for the terminal to which the first user account has logged in.

In another possible implementation, after the receiving, by the recording management server, the URL3, and publishing third recording information that carries the URL3 and the identity of the first user account to the content playback server, the method further includes:
receiving, by a second content playback server, a second access request that is for the URL2 and that is sent by a second terminal, identifying, according to the second access request, that the first shared file corresponding to the URL2 is a shared file, and sending a second public-to-private request that carries the URL2 to the second content recording server;
receiving, by the second content recording server, the second public-to-private request, generating, according to the second public-to-private request, a third private file by copying the data corresponding to the first clip in the first shared file, and sending the third private file to the second content playback server; and
sending, by the second content playback server, the third private file to the second terminal.

Optionally, after the receiving, by the second content recording server, the second public-to-private request, and generating, according to the second public-to-private request, a third private file by copying the data corresponding to the first clip in the first shared file, the method further includes:
sending, by the second content recording server, a uniform resource locator URL4 of the third private file to the recording management server;
receiving, by the recording management server, the URL4, and when the URL4 meets a first condition, sending a first deletion request that carries the URL4 to the second content recording server; and
receiving, by the second content recording server, the first deletion request, and deleting the third private file according to the first deletion request.

In another first possible implementation, the method further includes:
determining, by the recording management server based on received private recording tasks for recording a clip in the first content that are respectively sent by a plurality of terminals, that the first content does not include a non-overlapping clip of any one of clips corresponding to the private recording tasks;
sending, by the recording management server to a third content recording server, a second deletion request for the non-overlapping clip; and
receiving, by the third content recording server, the second deletion request, and deleting, according to the second deletion request, data that is corresponding to the non-overlapping clip and that is in the first shared file.

According to an eleventh aspect, an embodiment of the present invention further provides a content recording system, including a recording management server, at least one content recording server, and at least one content playback server, where the at least one content recording server includes a first recording server;
the recording management server is configured to: when receiving a first private recording task, sent by a first terminal, for recording a first clip in first content, respond to the first private recording task, where the first private recording task carries an identity of the first clip in the first content and an identity of a first user account, and is used to request to privately record the first clip in the first content to generate a first private file; and when a uniform resource locator URL1 of the first private file is not operated in a preset time period, generate, by the recording management server, a private-to-public request for the URL1, and send the request to the first content recording server;
the first content recording server is configured to: receive the private-to-public request, delete the first private file according to the private-to-public request, and send, to the recording management server, a uniform resource locator URL2 of a first clip in the first shared file;
the recording management server is further configured to publish first recording information that carries the URL2 and the identity of the first user account to the content playback server; and
the content playback server is configured to provide the URL2 for a terminal to which the first user account has logged in.

Optionally, the content recording server may be any content recording server in the fourth aspect or the seventh aspect, the first content recording server may be any content recording server in the fifth aspect or the eighth aspect, and the content playback server may be any content playback server in the sixth aspect or the ninth aspect.

According to a twelfth aspect, an embodiment of the present invention further provides a computer storage medium. The computer storage medium is configured to store a computer software instruction. When the computer software instruction is executed by a computer, the computer is enabled to perform the recorded data processing method in the first aspect.

According to a thirteenth aspect, an embodiment of the present invention further provides a computer program. The computer program includes a computer software instruction. When the instruction is executed by a computer, the computer is enabled to perform the recorded data processing method in the first aspect.

According to a fourteenth aspect, an embodiment of the present invention further provides a computer storage medium. The computer storage medium is configured to store a computer software instruction. When the computer software instruction is executed by a computer, the computer is enabled to perform the recorded data processing method in the second aspect.

According to a fifteenth aspect, an embodiment of the present invention further provides a computer program. The computer program includes a computer software instruction. When the instruction is executed by a computer, the computer is enabled to perform the recorded data processing method in the second aspect.

According to a sixteenth aspect, an embodiment of the present invention further provides a computer storage medium. The computer storage medium is configured to store a computer software instruction. When the computer software instruction is executed by a computer, the computer is enabled to perform the recorded data processing method in the third aspect.

According to a seventeenth aspect, an embodiment of the present invention further provides a computer program. The computer program includes a computer software instruction. When the instruction is executed by a computer, the computer is enabled to perform the recorded data processing method in the third aspect.

### BRIEF DESCRIPTION OF DRAWINGS

To describe the technical solutions in the embodiments of the present invention or in the prior art more clearly, the following briefly describes the accompanying drawings required for describing the embodiments or the prior art.
FIG. 1 is a schematic diagram of an architecture of a content recording system according to an embodiment of the present invention;
FIG. 2A and FIG. 2B are a schematic flowchart of a recorded data processing method according to an embodiment of this application;
FIG. 3 is a schematic flowchart of another recorded data processing method according to an embodiment of this application;
FIG. 4A to FIG. 4D are a schematic flowchart of still another recorded data processing method according to an embodiment of this application;
FIG. 5 is a schematic diagram of a structure of a recording management server according to an embodiment of this application;
FIG. 6 is a schematic diagram of a structure of another recording management server according to an embodiment of this application;
FIG. 7 is a schematic diagram of a structure of a content recording server according to an embodiment of this application;
FIG. 8 is a schematic diagram of a structure of another content recording server according to an embodiment of this application;
FIG. 9 is a schematic diagram of a structure of a content playback server according to an embodiment of this application; and
FIG. 10 is a schematic diagram of a structure of another content playback server according to an embodiment of this application.

### DESCRIPTION OF EMBODIMENTS

The following clearly and completely describes technical solutions in the prior art or in embodiments of the present invention with reference to accompanying drawings.

The following describes concepts mentioned in the embodiments of the present invention.

Private recording is a process of forming, by a content recording server, a private file based on a recording task initiated by a user. The recording task carries an identity of requested content or a requested clip (Program Identity, also referred to as a PID) and an identity of a user account (User Identity, also referred to as a UID).

A private file is a file generated by a content recording server through private recording. The private file is accessible only to a user who initiates the private recording, and is a private file of the user.

Shared recording is a recording which is generated based on content of a channel.

A shared file is a file generated by a content recording server through shared recording.

A uniform resource locator (Uniform Resource Locator, URL) is a simple representation of a location and an access method of a resource available on the Internet, and is a standard address of a resource on the Internet. Each file on the Internet has a unique URL. A unique file and a location of the file can be determined based on the URL.

Content is a fragment of media stream. The media stream may be an audio stream or a video stream.

A clip is a fragment in content, for example, a fragment distinguished by a start time or an end time.

For example, in the embodiments of the present invention, "content" may be all video content included in a channel (for example, CCTV1), and a clip may be video content included in the "content in a first time period". It should be understood that the content may be identified by the channel, and the content may be identified by the channel and the first time period.

For another example, in the embodiments of the present invention, "content" may be alternatively video or audio content included in a channel in a preset second time period, for example, "all content played at the CCTV1 on January 1, 2018", and a "clip" may be video content included in the content in a third time period, for example, a program that is played in a time period from 10:00 am to 11:00 am and that is in all the content played at the CCTV1 on January 1, 2018. It should be understood that the content may be identified by the channel and the second time period, and the clip may be identified by the channel, the second time period, and the third time period.

For another example, in the embodiments of the present invention, "content" may be a program, for example, The Lord of the Rings (English: The Lord of the Rings), and a clip may be content included in the program in a fourth time period, for example, content, played in a time from 15 min to 30 min, of The Lord of the Rings It should be understood that in this case, the content may be identified by a program identity (for example, a program name), and the clip may be identified by the program identity and the fourth time period.

It should be further understood that the foregoing time period may include a start time and an end time, and the content or the lip may be alternatively in another form. This is not limited in the present invention.

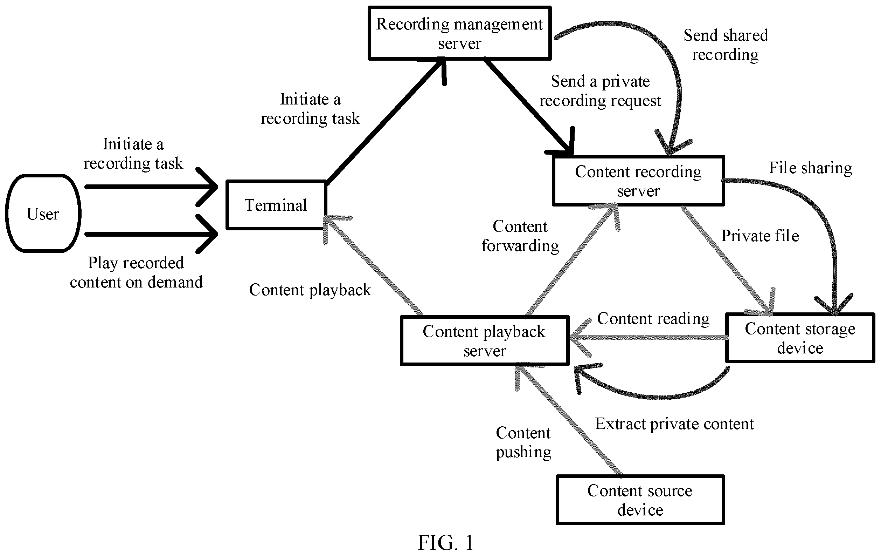

The following describes a content recording system in an embodiment of the present invention. As shown in FIG. 1, the content recording system may include at least one terminal, a recording management server, at least one content recording server, at least one content playback server, a content source device, and the like. Optionally, the content recording system may further include a content storage device. The content storage device or apparatus may be separately disposed out of the content recording server, or may be disposed in the content recording server.

The terminal (which may also be referred to as an access device) may be a device such as a set-top box (Set-Top-Box, STB for short), a smart television (Smart Television), a smartphone (Smart Phone), a tablet computer (Tablet Personal Computer), or a personal computer (Personal Computer, PC for short). This is not limited in this embodiment of the present invention. The terminal is configured to provide a user interaction interface for a user, so that the user can exchange information with a device such as the content recording management server or the content playback server. For example, the terminal receives a file sent by the content playback server, and then plays the file.

The recording management server is configured to receive a recording task sent by the terminal, handle the recording task, and then send a private recording request or a shared recording request to the content recording server. Then the content recording server records requested content or a requested clip, and generates a private file or a shared file. Optionally, the recording management server is further configured to publish a URL to the content playback server, manage a lifetime of a uniform resource locator URL, and the like.

The content recording server is responsible for responding to the private recording request or the shared recording request and generating a recorded file (for example, the private file and the shared file), and responding to an instruction or a request that is for the recorded file.

Optionally, the shared file may be generated through recording performed by the content recording server and triggered by the recording management server based on the received recording task. Alternatively, the shared file may be voluntarily recorded by the content playback server and received by the content recording server. For example, after receiving content sent by a video source device, the playback server sends the content to the content recording system, and then the content recording system performs recording.

It should be understood that the content recording server may include one or more servers. This is not limited in this embodiment of the present invention.

The content storage device is configured to store the recorded file.

The content playback server is configured to send information or content to the terminal, to play the content. In this embodiment of the present invention, the information may be a URL, and the content may be a private file read from the content storage device or private content extracted from a shared file. Optionally, the content playback server is further configured to: when detecting an access request for a shared file, copy content in the shared file to generate a private file; or send a public-to-private request to the content recording server, so that the content recording server copies the content in the shared file to generate a private file.

The video source device is configured to push a resource (also referred to as content in the embodiments of the present invention) to the content playback server.

It should be noted that for detailed roles or functions of the devices or the servers in the content recording system, reference may be made to a recorded data processing method described in the embodiments of the present invention.

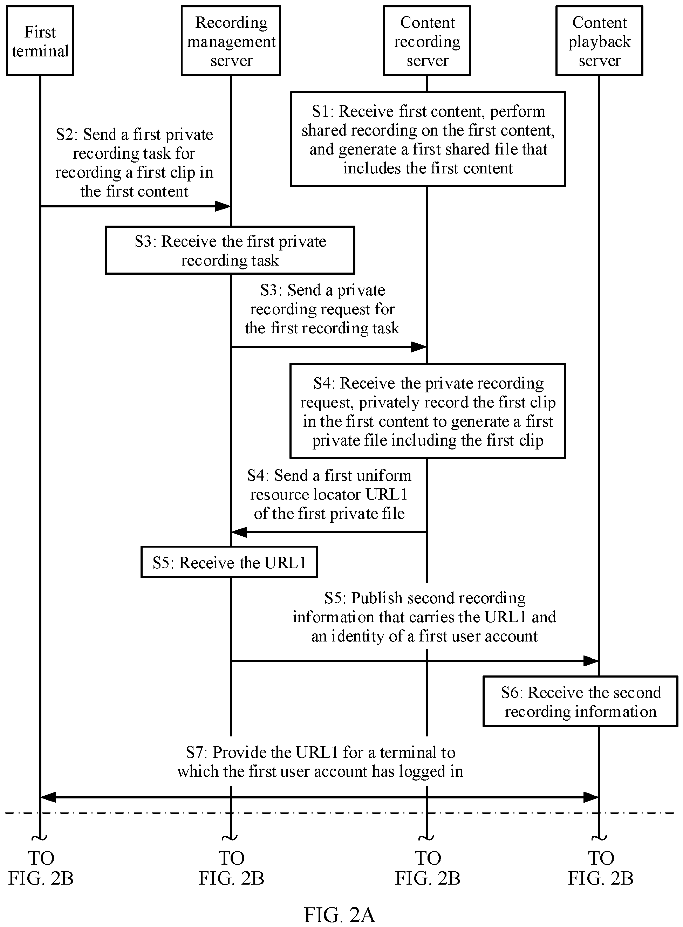

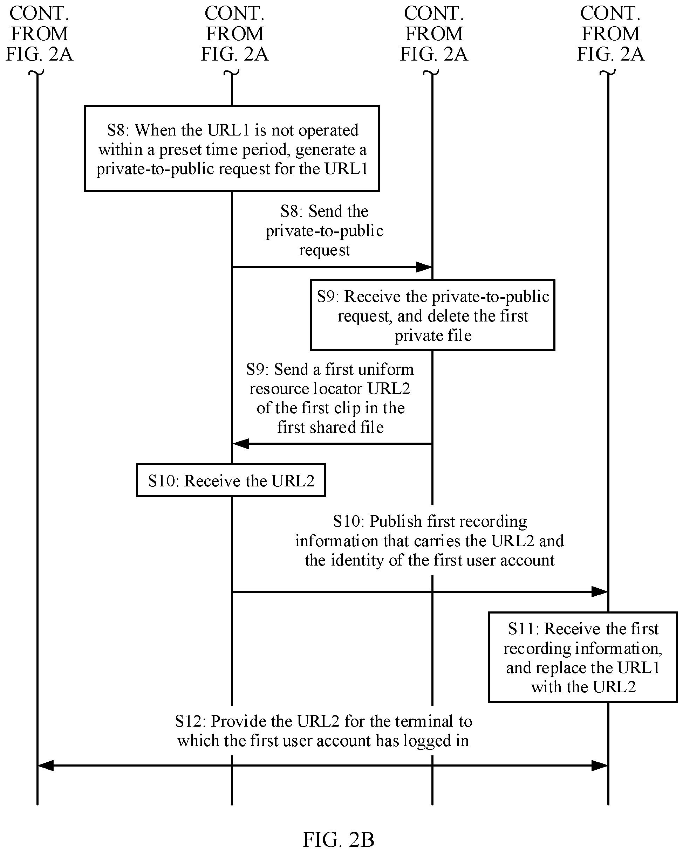

FIG. 2A and FIG. 2B show a recorded data processing method according to an embodiment of this application. The method includes some or all of the following steps.

Step S1: After receiving first content, a content recording server performs shared recording on the first content.

Specifically, when receiving the first content sent by a video source device, a content playback server forwards a data stream of the first content to the content recording server, and the content recording server records the data stream of the first content to form a first shared file including the first content, and stores the first shared file in a content storage device.

Any user who initiates a recording task for recording a clip in the first content can access the first shared file.

Step S2: A first terminal sends, to a recording management server, a first private recording task for recording a first clip in the first content.

It can be understood that the first terminal may provide a user interaction interface for a user, so that the user can exchange information with the recording management server or the content playback server by using the first terminal. The user interaction interface may include a plurality of pieces of content and/or a plurality of clips in content. The user may enter an instruction by using the user interaction interface, for example, enter a recording instruction for the first clip in the first content. After receiving the instruction, the first terminal generates the first private recording task for recording the first clip in the first content. It can be understood that the first private recording task carries an identity of the first clip in the first content, an identity of a first user account, and the like, and is used to request to privately record the first clip in the first content.

Step S3: The recording management server receives the first private recording task, and sends, to the content recording server based on the first private recording task, a private recording request for the first private recording task. The private recording request carries an identity of the first content and information about a location of the first clip in the first content, and is used to request the content recording server to privately record the first clip in the first content.

It should be understood that a content recording system may include a plurality of terminals, and the plurality of terminals each may send, to the recording management server, a recording task for recording a clip in the first content. For example, a second terminal may send, to the recording management server, a second recording task for recording a second clip in the first content. It should be further understood that the first clip and the second clip are two clips in the first content, and the first clip and the second clip may not overlap each other, or may include an overlapping clip. This is not limited in the present invention.

Optionally, the private recording request may further carry an identity of the first private recording task.

Step S4: The content recording server receives the private recording request, performs private recording on the first clip in the first content according to the private recording request, generates a first private file including the first clip in the first content, and sends a uniform resource locator URL1 of the first private file to the recording management server.

The first private file is a private file of a first user, and is accessible only to the first user.

Optionally, the URL1 includes the identity of the first content, the information about the location of the first clip in the first content, an identity (for example, an IP address) of the content recording server, a recording task identity (Task Identity), a file name, and the like.

Step S5: The recording management server receives the URL1, and publishes second recording information that carries the URL1 and the identity of the first user account to the content playback server.

Step S6: The content playback server receives the second recording information.

Step S7: The content playback server provides, based on the second recording information, the URL1 for a terminal to which the first user account has logged in.

It can be understood that the terminal to which the first user account has logged in (for example, the first terminal) may initiate a first request to the content playback server, to request to obtain the second recording information, and the content playback server may send the second recording information to the first terminal after receiving the first request. It can be understood that the second recording information may further include recording information of other content, other than recording information of the first clip in the first content.

Optionally, when the first user requests to play the URL1 on demand, the first terminal sends, to the content playback server, an access request for the UEL1. After receiving the access request, the content playback server reads the first private file from the content storage device, where the first private file is the first clip in the first content; and sends the first private file to the first terminal, so that the first terminal can play the recorded content.

Optionally, the first terminal may send, to the recording management server, a deletion task for the URL1, where the deletion request carries the URL1, the identity of the first user account, and the like. After receiving the deletion task, the recording management server sends a deletion request that carries the URL1 to the content recording server. The content recording server deletes, according to the received deletion request, the first private file corresponding to the URL1, and returns, to the recording management server, an acknowledgement message used to indicate that deletion succeeds. After receiving the acknowledgement message, the recording management server sends a deletion request that carries the URL1 to the content playback server. The content playback server deletes the URL1 from the first user account after receiving the deletion request. In this case, the recording management server may clear data about the URL1.

Step S8: When the URL1 is not operated in a preset time period, the recording management server generates a private-to-public request for the URL1, and sends the request to the content recording server, where the private-to-public request is used to instruct the content recording server to delete the first private file.

The recording management server may monitor an operation, such as opening or editing, on the URL1 or the first private file corresponding to the URL1. If the first private file is not operated in the preset time period (for example, 5 or 7 days after the first private file is created, or another time period), the recording management server generates the private-to-public request for the URL1, and sends the request to the content recording server. The private-to-public request carries the identity of the first private file, for example, carries the URL1.

Step S9: The content recording server receives the private-to-public request, deletes the first private file according to the private-to-public request, and sends a uniform resource locator URL2 of a first clip in the first shared file to the recording management server.

The URL2 may include the identity of the first content, information about a location of the first clip in the first file, the identity (for example, the IP address) of the content recording server, a shared identity, a file name, and the like. The shared identity is used to indicate that a file specified by the URL1 is a shared file, or a file specified by the URL1 is a private file copied from a shared file.

Optionally, the URL2 further includes the identity of the first private recording task. After receiving a recording task, the recording management server may define a unique identity for each recording task, where the unique identity is referred to as a recording task identity (Task Identity). The recording management server may determine, based on the recording task identity, information such as a user who initiates the recording task and a time when the recording task is initiated.

Step S10: The recording management server receives the URL2, and publishes first recording information that carries the URL2 and the identity of the first user account to the content playback server.

Step S11: The content playback server receives the first recording information and replaces the URL1 in the first user account with the URL2.

Step S12: The content playback server provides the URL1 for the terminal to which the first user account has logged in.

It can be understood that after step S11, the terminal to which the first user account has logged in (for example, the first terminal) may initiate a second request to the content playback server, to request to obtain the first recording information, and the content playback server may send the first recording information to the first terminal after receiving the first request, where the first recording information may include the URL2. It can be understood that the first recording information may further include recording information of other content, other than recording information of the first clip in the first content.

In this embodiment of the present invention, when the first user initiates the private recording task for recording the first clip in the first content, private recording is performed on the first clip in the first content to generate the first private file, and shared recording is performed on the first clip in the first content to generate the first shared file; the content playback server publishes, to the terminal, the URL1 of the first private file generated through private recording; and when the uniform resource locator URL1 of the first private file is not operated in the preset time period, the recording management server instructs the content recording server to delete the first private file, and publishes, to the content playback server, the uniform resource locator URL2 corresponding to the first clip in the first shared file, to reduce storage space occupied by a private file and save storage space.

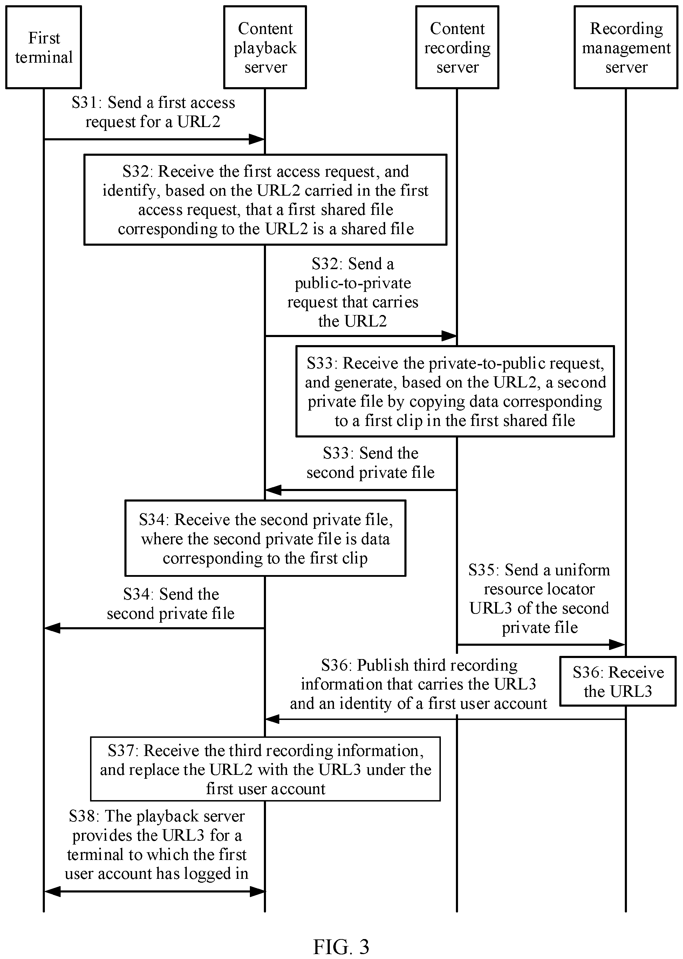

FIG. 3 shows another recorded data processing method provided in an embodiment of the present invention. In addition to all or some of the processes in FIG. 2A and FIG. 2B (not shown in FIG. 3), the recorded data processing method may further include the following steps.

Step S31: A first terminal sends, to a content playback server, a first access request for a URL2.

It can be understood that after step S12, a terminal to which a first user account has logged in (for example, the first terminal) may send, to the content playback server, the first access request for the URL2. The first access request carries the URL2.

Step S32: The content playback server receives the first access request, identifies, based on the URL2 carried in the first access request, that a first file corresponding to the URL2 is a shared file, and sends a public-to-private request that carries the URL2 to a content recording server.

Step S33: The content recording server receives the public-to-private request, generates, based on the URL2, a second private file by copying data corresponding to a first clip in the first shared file, and sends the second private file to the content playback server.

The second private file is a private file and is accessible only to a first user.

Step S34: The content playback server receives the second private file, and sends the second private file to the first terminal. The second private file is data corresponding to a first clip in first content.

Optionally, after the content recording server generates, based on the URL2, the second private file by copying the data corresponding to the first clip in the first shared file, the method further includes the following steps.

Step S35. The content recording server sends a uniform resource locator URL3 of the second private file to a recording management server.

Optionally, the URL3 may include an identity of the first content, an identity (for example, an IP address) of the content recording server, a recording task identity (Task Identity), a file name, and the like. After receiving a recording task, the recording management server may define a unique identity for each recording task, where the unique identity is referred to as a recording task identity (Task Identity). A user who initiates the task may be determined based on the recording task identity.

Step S36: The recording management server receives the URL3, and publishes third recording information that carries the URL3 and an identity of the first user account to the content playback server.

Step S37: The playback server receives the third recording information, and replaces the URL2 in the first user account with the URL3.

Step S38: The content playback server provides the URL3 for the terminal to which the first user account has logged in.

It can be understood that the terminal to which the first user account has logged in (for example, the first terminal) may initiate a third request to the content playback server, to request to obtain the third recording information, and the content playback server may send the third recording information to the first terminal after receiving the third request. The third recording information includes the URL3. It can be understood that the third recording information may further include recording information of other content, other than recording information of the first clip in the first content.

In this embodiment of the present invention, when the first terminal requests to access data corresponding to the URL2, the content playback server sends a first public-to-private request that carries the URL2 to a first content recording server, to request to generate the second private file by copying the data corresponding to the first clip in the first shared file, and then sends the second private file to the first terminal, so that the terminal can properly access the recorded data.

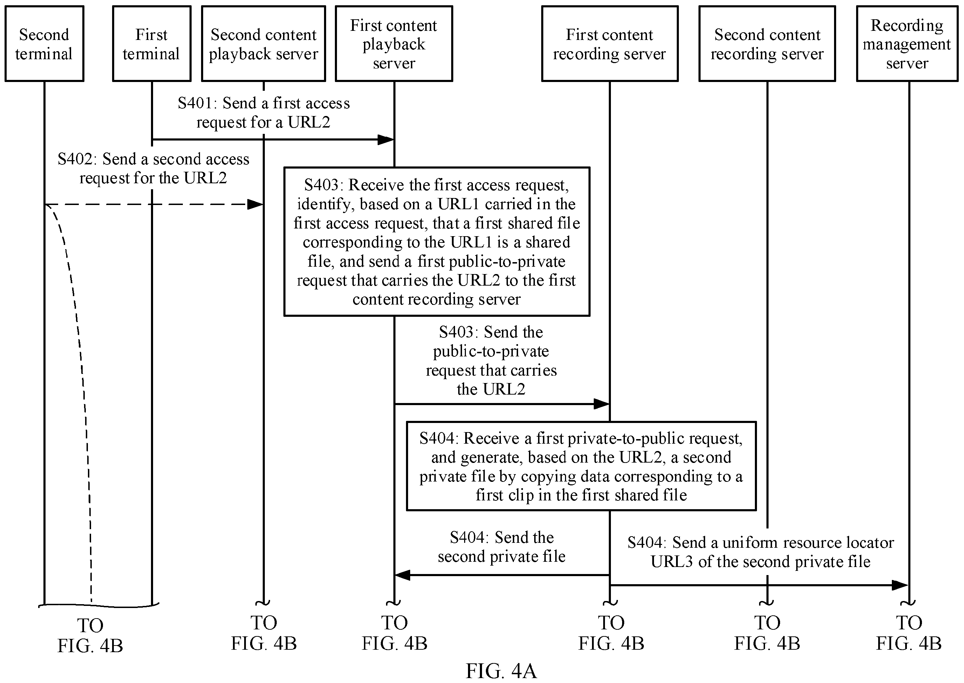

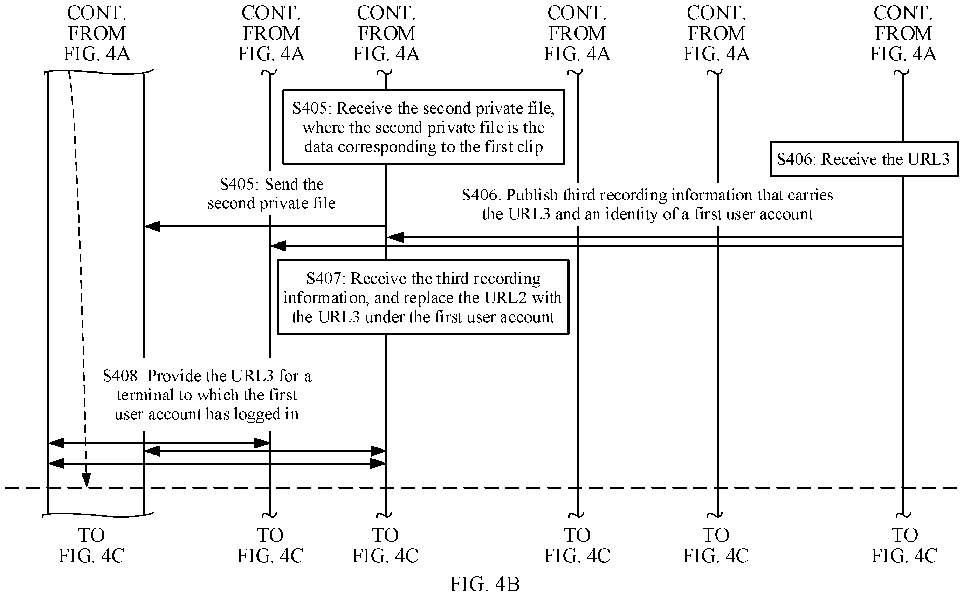

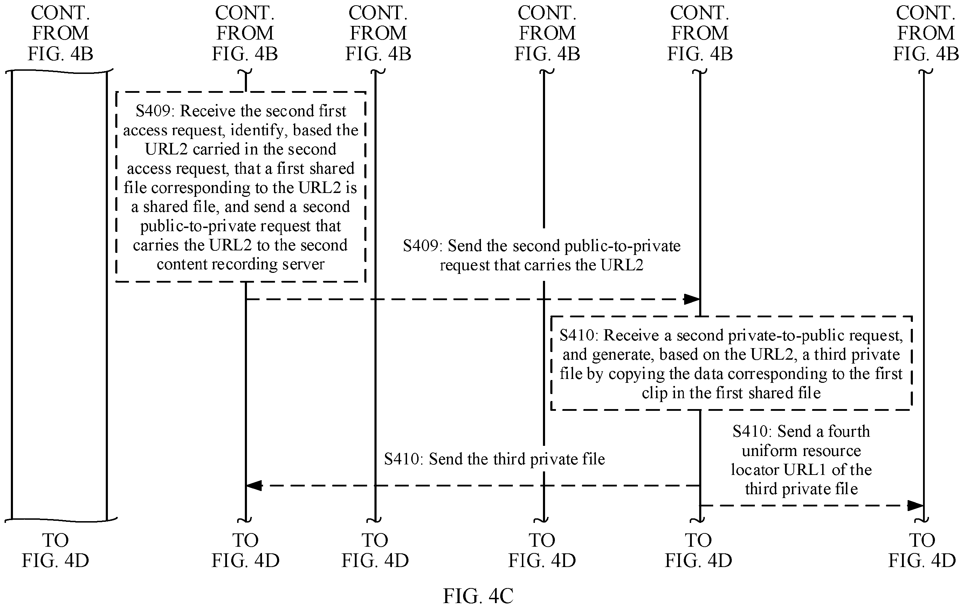

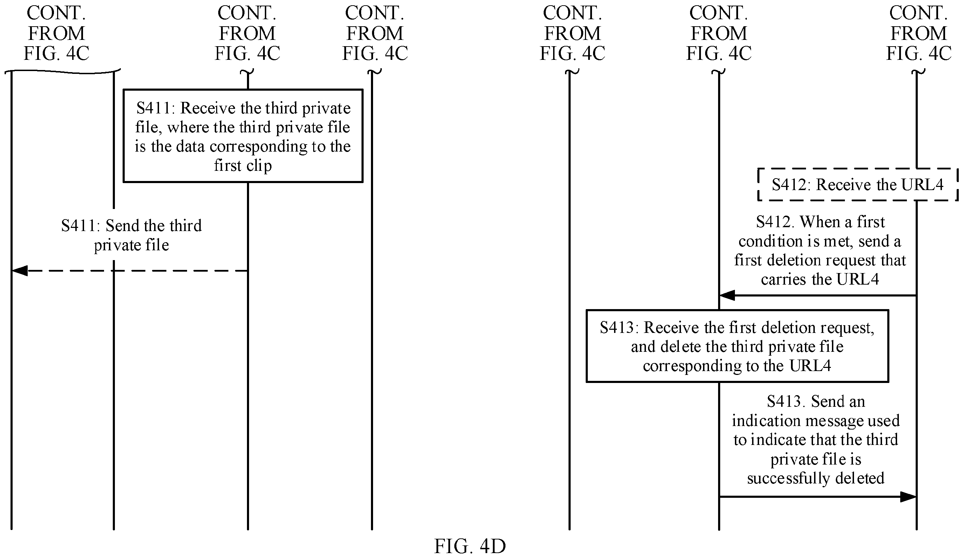

In an embodiment of the present invention, based on the recorded data processing method shown in FIG. 3, the content recording server may be a first content recording server. Using an example in which the content recording server is a first content recording server, before step S37, another terminal to which the first user account has logged in, for example, a second terminal, also initiates an access request that carries the URL2. FIG. 4A to FIG. 4D show still another recorded data processing method provided in an embodiment of the present invention. In addition to all or some of the processes in FIG. 3 (not shown in FIG. 4A to FIG. 4D), the recorded data processing method may further include the following steps.

Step S401: A first terminal sends, to a first content playback server, a first access request for a URL2. The first access request carries the URL2, and is used to request, from the first content playback server, data corresponding to the URL2. It can be understood that the data corresponding to the URL2 is data corresponding to a first clip in first content.

Step S402: A second terminal sends, to a second content playback server, a second access request for the URL2. The second access request carries the URL2, and is used to request, from the second content playback server, the data corresponding to the URL2.

It can be understood that step S402 is performed before step S408.

Step S403: The first content playback server receives the first access request, identifies, based on the URL2 carried in the first access request, that a first shared file corresponding to the URL2 is a shared file, and sends a first public-to-private request that carries the URL2 to a first content recording server.

Step S404: The first content recording server receives the first public-to-private request, generates, based on the URL2, a second private file by copying data corresponding to a first clip in the first shared file, sends the second private file to the first content playback server, and sends a uniform resource locator URL3 of the second private file to a recording management server.

Step S405: The content recording server receives the second private file and sends the second private file to the first terminal. The second private file is the data corresponding to the first clip.

Step S406: The recording management server receives the URL3, and publishes third recording information that carries the URL3 and an identity of a first user account to the first content playback server.

Step S407: The playback server receives the third recording information and replaces the URL2 in the first user account with the URL3.

Step S408: The first content playback server provides the URL3 for a terminal to which the first user account has logged in.

It can be understood that the terminal to which the first user account has logged in (for example, the first terminal or the second terminal) may initiate a third request to the content playback server, to request to obtain the third recording information, and the content playback server may send the third recording information to the first terminal after receiving the third request. The third recording information includes the URL3. It can be understood that the third recording information may further include recording information of other content, other than recording information of the first clip in the first content.

Step S409: The second content playback server receives the second access request, identifies, based on the URL2 carried in the second access request, that the first shared file corresponding to the URL2 is a shared file, and sends a second public-to-private request that carries the URL2 to a second content recording server.

It can be understood that the content playback servers send public-to-private requests that carry the URL2 to different content recording servers. Step S409 may be performed after step S402.

Step S410: The second content recording server receives the second public-to-private request, generates, based on the URL2, a third private file by copying the data corresponding to the first clip in the first shared file, sends the third private file to the second content playback server, and sends a uniform resource locator URL4 of the third private file to the recording management server.

Step S411: The content recording server receives the third private file and sends the third private file to the second terminal. The third private file is the data corresponding to the first clip.

Step S412: The recording management server receives the URL4, and when a first condition is met, sends a first deletion request that carries the URL4 to the second content recording server.

It can be understood that the recording management server may receive the URL4 after step S410. When the first condition is met (for example, it is detected that the third private file is not read or none of private files generated by copying data corresponding to the URL2 is read), the recording management server may send the first deletion request that carries the URL4 to the second content recording server.

Optionally, the first condition may be alternatively that it is determined that the URL4 is a URL that is for the first clip in the first content but not the 1^{st} URL that is for the first clip in the first content and that is received in a preset time.

Step S413: The second content recording server receives the first deletion request, deletes the third private file corresponding to the URL4, and after the third private file is deleted, sends, to the recording management server, an indication message indicating that the third private file is successfully deleted.

The second content recording server may be any content recording server that receives a public-to-private request carrying the URL1, or may be a content recording server corresponding to a message that is used to indicate a recording success but not the 1^{st} message that is used to indicate a recording success and that is received by the recording management server. To be specific, the recording management server keeps the 1^{st} successfully recorded private file, and deletes a subsequent successfully recorded private file, to avoid unnecessary occupation of storage resources. In addition, the third private file is deleted after the playback server receives the third private file, thereby ensuring that the third private file can be properly played by the second terminal during current access of the second terminal.

It should be noted that the first content recording server and the second content recording server in this embodiment of the present invention may be different content recording servers, or may be a same content recording server. This is not limited in this embodiment of the present invention.

In this embodiment of the present invention, when a plurality of terminals (for example, the first terminal and the second terminal) to which the first user account has logged in simultaneously request to access the data corresponding to the URL2, each content recording server that responds to an access request for the URL2 generates a private file including the first clip in the first content. To avoid repeated storage of a private file, duplicate private files on some content recording servers are deleted, to further reduce storage space occupied by a private file.

In an embodiment of the present invention, the recorded-data processing method may further include the following steps.

Step S13: The recording management server determines, based on received private recording tasks for recording a clip in the first content that are respectively sent by a plurality of terminals, that the first content does not include a non-overlapping clip of any one of the clips corresponding to the private recording tasks.

Step S14: The recording management server sends, to the content recording server, a deletion instruction for the non-overlapping clip, where the deletion instruction is used to instruct the content recording server to delete data that is corresponding to the non-overlapping clip and that is in the first shared file.

Step S15: The content recording server receives the deletion instruction, and deletes, according to the deletion instruction, the data that is corresponding to the non-overlapping clip and that is in the first shared file.

It should be noted that steps S13, S14, and S15 may be performed at any moment after step S1, or steps S13, S14, and S15 may be triggered in a scheduled manner. This is not limited in the present invention.

It should be further noted that the content recording server in this embodiment of the present invention may be any content recording server, for example, a third content recording server. This is not limited in the present invention.

It can be learned that in the foregoing method, an amount of data stored in the first shared file is reduced, thereby further reducing storage space occupied by a recorded file.

In the embodiments of the present invention, a shared file and a private file may be identified in the following two manners.

First manner: A URL1 does not carry a shared identity. A recording management server may identify, based on the URL1, that a file corresponding to the URL1 is a private file and is not a file copied from a shared file. A URL2, a URL3, and a URL4 each may carry a shared identity. Different from the URL3 or the URL4, the URL2 further carries information about a location of a first clip in first content. The recording management server may determine, based on that the URL3 or the URL4 may carry a shared identity, that a file corresponding to the URL3 or the URL4 is copied from a shared file and is a private file. The recording management server may identify, based on the shared identity carried in the URL2 and the information about the location of the first clip in the first content, that a file corresponding to the URL2 is a shared file.

Second manner: A URL1 does not carry a shared identity or a copy identity. A recording management server may identify, based on the URL1, that a file corresponding to the URL1 is a private file and is not a file copied from a shared file. A URL3 and a URL4 each may carry a copy identity. The recording management server may determine, based on that the URL3 or the URL4 may carry a copy identity, that a file corresponding to the URL3 or the URL4 is copied from a shared file and is a private file. The recording management server may identify, based on a shared identity carried in a URL2, that a file corresponding to the URL2 is a shared file.

It should be understood that a second private file corresponding to the URL3 and a third private file corresponding to the URL4 are both private files. Similar to that for the URL1, in a first aspect, when a content playback server receives an access request for the URL3 or the URL4, processing is performed in a manner similar to that for an access request for the URL1. Refer to the foregoing related descriptions. Details are not described in this application again. In a second aspect, the recording management server may monitor an operation on the URL3 or the URL4, for example, opening or editing. If the URL3 or the URL4 is not operated in a preset time period (for example, 5 or 7 days after a first private file is created, or another time period), the recording management server generates a private-to-public request for the URL3 or the URL4, and sends the request to a content recording server. For details, refer to the processing manner for the private-to-public request for the URL 1 in FIG. 2A and FIG. 2B. Details are not described in the present invention again.

For example, refer to example formats of the URL1, the URL2, and the URL3 shown in the following table:

| | |
|---|---|
| URL1 | http://IP:PORT/SP_ID/CHANNEL_ID/YEAR/MONTH/DAY/MlNUTE/USER_ID/TAS K_ID/TASK_ID.mpd?servicetype=MAGIC_ID&cloudpvr=SERVER_ID,SERVER_IP,M OUNT_ID |
| URL2 | http://IP:PORT/SP_ID/CHANNEL_ID/YEAR/MONTH/DAY/MlNUTE/USER_ID/TAS K_ID/TASK_ID.mpd?servicetype=MAGIC_ID&cloudpvr=SERVER_ID,SERVER_IP,M OUNT_ID&sharecopy=1&playseek=BEGINTIME-ENDTIME |
| URL3 | http://IP:PORT/SP_ID/CHANNEL_ID/YEAR/MONTH/DAY/MlNUTE/USER_ID/TAS K_ID/TASK_ID.mpd?servicetype=MAGIC_ID&cloudpvr=SERVER_ID,SERVER_IP,M OUNT_ID&sharecopy=1 |

"IP:PORT" is an IP address and a port number, a domain name, or the like of a playback server. "SP_ID" is an address identity of a content service provider. "CHANNEL_ID/YEAR/MONTH/DAY/MlNUTE" is an identity of first content. "USER_ID" is an identity of a user account. TASK_ID is an identity of a recording task. "TASK_ID.mpd" is an identity of a recorded file, for example, a name of an index file. "servicetype=MAGIC_ID" is a type of a content transfer protocol (this is optional, and some video websites have only one type of video). "cloudpvr=SERVER_ID,SERVER_IP" is an address identity of a content recording server. "MOUNT_ID" is an identity of a storage location.

"servicetype=MAGIC_ID" is an optional item. It can be understood that content provided by a specific video website may be only one type of video.

Compared with the URL1, the URL2 has two additional identities: "sharecopy=1" and "playseek=BEGINTIME-ENDTIME". "sharecopy=1" is a shared identity, and "playseek=BEGINTIME-ENDTIME" is information about a location of a first clip in first content, for example, a start time and an end time of the first clip. A content playback server finds, based on these parameters, data corresponding to a first clip in a first shared file, and provides a service for a user or sends the data to a content recording server for public-to-private conversion, that is, generating a second private file by using the data corresponding to the first clip in the first shared file.

Compared with the URL1, the URL3 has only one additional identity: "sharecopy=1". A content playback server reads "SERVER_ID (server identity)" and "SERVER_IP (server address)" based on the identity, to find an address of a second private file or a third private file that is obtained through public-to-private conversion recording. A plurality of content recording servers may perform public-to-private conversion in parallel. Therefore, to prevent a plurality of servers from writing a same file in parallel, each content recording server needs to create a separate directory, and is identified by "cloudpvr=SERVER_ID,SERVER_IP" in the directory. Finally, only one public-to-private conversion takes effect, and the finally published URL3 includes an address identity of the content recording server.

The following describes a device in an embodiment of the present invention.

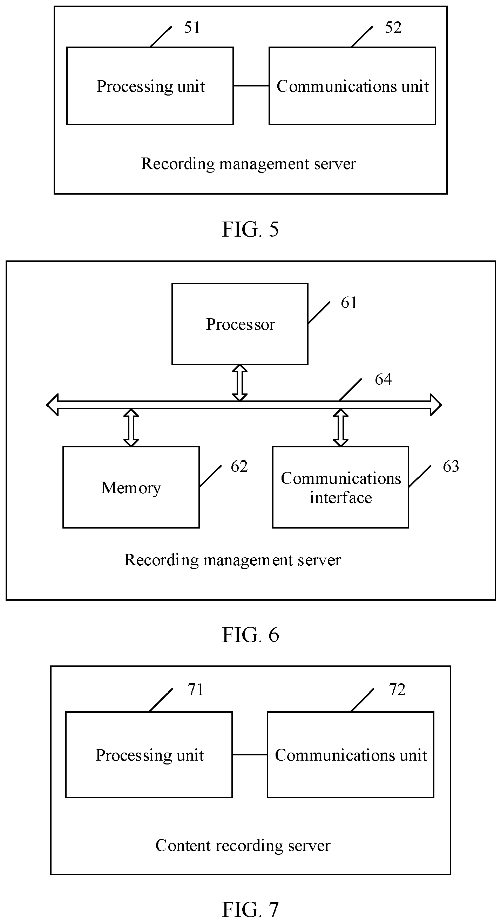

FIG. 5 is a schematic diagram of a structure of a recording management server according to an embodiment of this application. The recording management server may include a processing unit 51 and a communications unit 52.

The processing unit 51 is configured to: when a first private recording task that is for a first clip in first content and this is sent by a first terminal is received, respond to the first private recording task, where the first private recording task carries an identity of the first clip in the first content and an identity of a first user account, and is used to request to privately record the first clip in the first content to generate a first private file; and
when a uniform resource locator URL1 of the first private file is not operated in a preset time period, generate a private-to-public request for the URL1, and send the request to a first content recording server, where the private-to-public request is used to instruct the first content recording server to delete the first private file and send, to the recording management server, a uniform resource locator URL2 of a first clip in a first shared file including the first clip in the first content.

The communications unit 52 is configured to: receive the URL2, and publish first recording information that carries the URL2 and the identity of the first user account to a content playback server, where the first recording information is used for the content playback server to provide the URL2 for a terminal to which the first user account has logged in.

Optionally, the URL2 includes an identity of the first content and information about a location of the first clip in the first content.

In an embodiment of the present invention, the communications unit 52 is further configured to:
send, to the first content recording server, a private recording request for the first private recording task, where the private recording request is used to instruct the first content recording server to privately record the first clip in the first content according to the private recording request, generate the first private file including the first clip in the first content, and send the uniform resource locator URL1 of the first private file to the recording management server; and
receive the URL1, and publish second recording information that carries the URL1 and the identity of the first user account to the content playback server, where the second recording information is used for the content playback server to provide the URL1 for the terminal to which the first user account has logged in.

In an embodiment of the present invention, the communications unit 52 is further configured to:
after the communications unit 52 receives the URL2 and publishes the first recording information that carries the URL2 and the identity of the first user account to the content playback server, receive a uniform resource locator URL3, sent by the first content recording server, of a second private file, where the second private file is generated by copying data corresponding to the first clip in the first shared file by the first content recording server according to a received first public-to-private request that carries the URL2; and
publish third recording information that carries the URL3 and the identity of the first user account to the content playback server, where the third recording information is used for the content playback server to provide the URL3 for the terminal to which the first user account has logged in.

In an embodiment of the present invention, the communications unit 52 is further configured to:
before the communications unit 52 publishes the third recording information that carries the URL3 and the identity of the first user account to the content playback server, receive a uniform resource locator URL4, sent by the second content recording server, of a third private file, where the third private file is generated by copying the data corresponding to the first clip in the first shared file by the second content recording server according to a received second public-to-private request that carries the URL4; and
when the URL4 meets a first condition, send a first deletion request that carries the URL4 to the second content recording server, where the first deletion request is used to instruct the second content recording server to delete the third private file.

In an embodiment of the present invention, the processing unit 51 is further configured to determine, based on received private recording tasks for recording a clip in the first content that are respectively sent by a plurality of terminals, that the first content does not include a non-overlapping clip of any one of clips corresponding to the private recording tasks; and
the communications unit 52 is further configured to send, to a third content recording server, a second deletion request for the non-overlapping clip, where the second deletion request is used to instruct the third content recording server to delete data that is corresponding to the non-overlapping clip and that is in the first shared file.

It should be noted that for specific implementation of the units in the recording management server in this embodiment of the present invention, reference may be made to the related descriptions in the foregoing method embodiments. Details are not described in this embodiment of the present invention again.

FIG. 6 is a schematic diagram of a structure of another recording management server according to an embodiment of this application. The recording management server may include a processor 61, a memory 62, and a communications interface 63. The processor 61 is connected to the memory 62 and the communications interface 63 by using a bus 64.

The memory 62 may be configured to store a computer program and a module, and the memory 62 may include a high-speed random access memory 62, or may include a non-volatile memory such as at least one magnetic disk storage device, a flash memory device, or another volatile solid-state storage device. Correspondingly, the memory 62 may further include a memory controller, to provide access for the processor 61.

The processor 61 is a control center of the recording management server, connects various parts of the entire recording management server by using various interfaces and lines, and executes various functions and data processing of the recording management server by running or executing the computer program and/or the module stored in the memory 62 and invoking data stored in the memory 62. Optionally, the processor 61 may include one or more processing cores.

The communications interface 63 is configured to establish a communication channel, is connected to a communication peer end through the communication channel, and exchanges data with the communication peer end through the communication channel. For example, the communications interface 63 is configured to implement a communication connection between the recording management server and a terminal, a content recording server, a content playback server, or the like.

The processor 61 is configured to invoke program code stored in the memory 62 to perform the following operations:
when a first private recording task, sent by a first terminal, for recording a first clip in first content is received, responding to the first private recording task, where the first private recording task carries an identity of the first clip in the first content and an identity of a first user account, and is used to request to privately record the first clip in the first content to generate a first private file;
when a uniform resource locator URL1 of the first private file is not operated in a preset time period, generating a private-to-public request for the URL1, and sending the request to a first content recording server, where the private-to-public request is used to instruct the first content recording server to delete the first private file and send, to the recording management server, a uniform resource locator URL2 of a first clip in a first shared file including the first clip in the first content; and
receiving the URL2 by using the communications interface 63, and publishing first recording information that carries the URL2 and the identity of the first user account to a content playback server, where the first recording information is used for the content playback server to provide the URL2 for a terminal to which the first user account has logged in.

Optionally, the URL2 includes an identity of the first content and information about a location of the first clip in the first content.

In an embodiment of the present invention, the responding, by the processor 61, to the first private recording task specifically includes:
sending, to the first content recording server by using the communications interface 63, a private recording request for the first private recording task, where the private recording request is used to instruct the first content recording server to privately record the first clip in the first content according to the private recording request, generate the first private file including the first clip in the first content, and send the uniform resource locator URL1 of the first private file to the recording management server; and
receiving the URL1 by using the communications interface 63, and publishing second recording information that carries the URL1 and the identity of the first user account to the content playback server, where the second recording information is used for the content playback server to provide the URL1 for the terminal to which the first user account has logged in.

In an embodiment of the present invention, after receiving the URL2 by using the communications interface 63 and publishing the first recording information that carries the URL2 and the identity of the first user account to the content playback server, the processor 61 is further configured to perform the following operations:
receiving, by using the communications interface 63, a uniform resource locator URL3, sent by the first content recording server, of a second private file, where the second private file is generated by copying data corresponding to the first clip in the first shared file by the first content recording server according to a received first public-to-private request that carries the URL2; and
publishing, by using the communications interface 63, third recording information that carries the URL3 and the identity of the first user account to the content playback server, where the third recording information is used for the content playback server to provide the URL3 for the terminal to which the first user account has logged in.

In an embodiment of the present invention, before publishing, by using the communications interface 63, the third recording information that carries the URL3 and the identity of the first user account to the content playback server, the processor 61 is further configured to perform the following operations:
receiving, by using the communications interface 63, a uniform resource locator URL4, sent by the second content recording server, of a third private file, where the third private file is generated by copying the data corresponding to the first clip in the first shared file by the second content recording server according to a received second public-to-private request that carries the URL4; and
when the URL4 meets a first condition, sending, by using the communications interface 63, a first deletion request that carries the URL4 to the second content recording server, where the first deletion request is used to instruct the second content recording server to delete the third private file.

In an embodiment of the present invention, the processor 61 is further configured to perform the following operations:
determining, based on received private recording tasks for recording a clip in the first content that are respectively sent by a plurality of terminals, that the first content does not include a non-overlapping clip of any one of clips corresponding to the private recording tasks; and
sending, to a third content recording server by using the communications interface 63, a second deletion request for the non-overlapping clip, where the second deletion request is used to instruct the third content recording server to delete data that is corresponding to the non-overlapping clip and that is in the first shared file.

It should be noted that for implementation of each instruction in this embodiment of the present invention, refer to the related descriptions in the method embodiment, and details are not described again in the present invention.

FIG. 7 is a schematic diagram of a structure of a content recording server according to an embodiment of this application. The content recording server may include a processing unit 71 and a communications unit 72.

The processing unit 71 is configured to: when a private recording request that is for a first recording task and that is sent by a recording management server is received, privately recording a first clip in first content, and generate a first private file, where the first private recording task carries an identity of the first clip in the first content and an identity of a first user account; and
the communications unit 72 is configured to: receive a private-to-public request that carries a uniform resource locator URL1 of the first private file and that is sent by the recording management server, delete the first private file according to the private-to-public request, and send a uniform resource locator URL2 of a first clip in the first shared file to the recording management server, so that the recording management server publishes first recording information that carries the URL2 and the identity of the first user account to a content playback server, where
the private-to-public request is a request generated by the recording management server and sent by the recording management server to the content recording server when the uniform resource locator URL1 of the first private file is not operated in a preset time period; and
the first recording information is used for the content playback server to provide the URL2 for a terminal to which the first user account has logged in.

In an embodiment of the present invention, the communications unit 72 is further configured to: after the processing unit 71 privately records the first clip in the first content and generates the first private file, and before the communications unit 72 receives the private-to-public request that carries the uniform resource locator URL1 of the first private file and that is sent by the recording management server, send the uniform resource locator URL1 of the first private file to the recording management server, so that after receiving the URL1, the recording management server publishes second recording information that carries the URL1 and the identity of the first user account to the content playback server, where the second recording information is used for the content playback server to provide the URL1 for the terminal to which the first user account has logged in.

In an embodiment of the present invention, the communications unit 72 is further configured to receive a public-to-private request that carries the URL2 and that is sent by the content playback server;
the processing unit 71 is further configured to generate, according to the public-to-private request, a second private file by copying data corresponding to the first clip in the first shared file; and
the communications unit 72 is further configured to send the second private file to the content playback server.

In an embodiment of the present invention, the communications unit 72 is further configured to: after the processing unit 71 generates, according to the public-to-private request, the second private file by copying the data corresponding to the first clip in the first shared file, send third recording information that carries the URL3 and the identity of the first user account to the recording management server, so that the recording management server publishes the third recording information that carries the URL2 and the identity of the first user account to the content playback server, where the third recording information is used for the content playback server to provide the URL3 for the terminal to which the first user account has logged in.

It should be noted that for specific implementation of the units in the content recording server in this embodiment of the present invention, reference may be made to the related descriptions in the foregoing method embodiments. Details are not described in this embodiment of the present invention again.

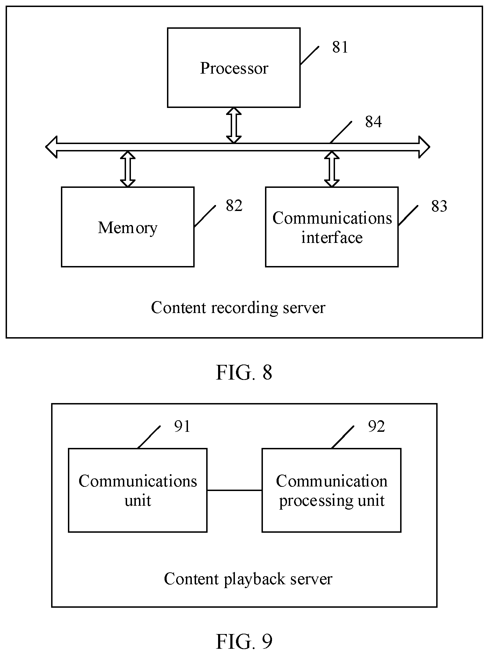

FIG. 8 is a schematic diagram of a structure of another content recording server according to an embodiment of this application. The content recording server may include a processor 81, a memory 82, and a communications interface 83. The processor 81 is connected to the memory 82 and the communications interface 83 by using a bus 84.

The memory 82 may be configured to store a computer program and a module, and the memory 82 may include a high-speed random access memory, or may include a non-volatile memory such as at least one magnetic disk storage device, a flash memory device, or another volatile solid-state storage device. Correspondingly, the memory 82 may further include a memory controller, to provide access for the processor 81.

The processor 81 is a control center of the recording management server, connects various parts of the entire recording management server by using various interfaces and lines, and executes various functions and data processing of the recording management server by running or executing the computer program and/or the module stored in the memory 82 and invoking data stored in the memory 82. Optionally, the processor 81 may include one or more processing cores.

The communications interface 83 is configured to establish a communication channel, is connected to a communication peer end through the communication channel, and exchanges data with the communication peer end through the communication channel. For example, the communications interface 83 is configured to implement a communication connection between a recording management server and a terminal, the content recording server, a content playback server, or the like.

The processor 81 is configured to invoke program code stored in the memory 82 to perform the following operations:
when a private recording request that is for a first recording task and that is sent by the recording management server is received, privately recording a first clip in first content to generate a first private file, where the first private recording task carries an identity of the first clip in the first content and an identity of a first user account; and
when a uniform resource locator URL1 of the first private file is not operated in a preset time period, receiving, by using the communications interface 83, a private-to-public request that carries the uniform resource locator URL 1 of the first private file and that is sent by the recording management server, deleting the first private file according to the private-to-public request, and sending a uniform resource locator URL2 of a first clip in the first shared file to the recording management server, so that the recording management server publishes first recording information that carries the URL2 and the identity of the first user account to the content playback server, where
the first recording information is used for the content playback server to provide the URL2 for a terminal to which the first user account has logged in.

In an embodiment of the present invention, after privately recording the first clip in the first content to generate the first private file, and before receiving, by using the communications interface 83, the private-to-public request that carries the uniform resource locator URL1 of the first private file and that is sent by the recording management server, the processor 81 is further configured to perform the following operation:
sending the uniform resource locator URL 1 of the first private file to the recording management server by using the communications interface 83, so that after receiving the URL1, the recording management server publishes second recording information that carries the URL1 and the identity of the first user account to the content playback server, where the second recording information is used for the content playback server to provide the URL1 for the terminal to which the first user account has logged in.

In an embodiment of the present invention, the processor 81 is further configured to perform the following operations:
receiving, by using the communications interface 83, a public-to-private request that carries the URL2 and that is sent by the content playback server;
generating, according to the public-to-private request, a second private file by copying data corresponding to the first clip in the first shared file; and
sending the second private file to the content playback server by using the communications interface 83.

In an embodiment of the present invention, after the generating, according to the public-to-private request, the second private file by copying the data corresponding to the first clip in the first shared file, the processor 81 is further configured to perform the following operation:
sending, by using the communications interface 83, third recording information that carries the URL3 and the identity of the first user account to the recording management server, so that the recording management server publishes the third recording information that carries the URL2 and the identity of the first user account to the content playback server, where the third recording information is used for the content playback server to provide the URL3 for the terminal to which the first user account has logged in.

It should be noted that for implementation of each instruction in this embodiment of the present invention, refer to the related descriptions in the method embodiment, and details are not described again in the present invention.

FIG. 9 is a schematic diagram of a structure of a content playback server according to an embodiment of this application. The content playback server may include a communications unit 91. The communications unit 91 is configured to:
receive first recording information that carries a uniform resource locator URL2 of a first clip in a first shared file and an identity of the first user account and that is published by a recording management server; and
send, based on the first recording information, the URL2 to a terminal to which the first user account has logged in, where
the first recording information is information published by the recording management server to the content playback server after the recording management server instructs, when a uniform resource locator URL1 of a first private file is not operated in a preset time period, the content recording server to delete the first private file; and
the first private file is a private file generated by recording a first clip in first content by the content recording server according to a received recording request for recording the first clip in the first content.

In an embodiment of the present invention, the communications unit 91 is further configured to: before receiving the first recording information that carries the uniform resource locator URL2 of the first clip in the first shared file and the identity of the first user account and that is published by the recording management server, receive second recording information that carries the uniform resource locator URL1 of the first private file and the identity of the first user account and that is published by the recording management server.

In an embodiment of the present invention, the communications unit 91 is further configured to receive a first access request that is for the URL2 and that is sent by a first terminal;
the content playback server further includes a processing unit 92, where the processing unit 92 is configured to identify, according to the first access request, that the first shared file corresponding to the URL2 is a shared file; and
the communications unit 91 is further configured to send a public-to-private request that carries the URL2 to the content recording server, so that the content recording server receives the public-to-private request, generates, according to the public-to-private request, a second private file by copying data corresponding to the first clip in the first shared file, and sends the second private file to the content playback server.

It should be noted that for specific implementation of the units in the content playback server in this embodiment of the present invention, reference may be made to the related descriptions in the foregoing method embodiments. Details are not described in this embodiment of the present invention again.

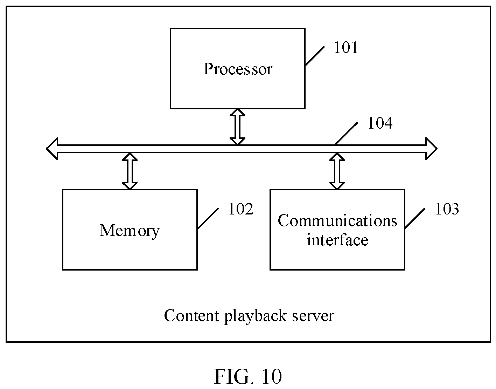

FIG. 10 is a schematic diagram of a structure of another content playback server according to an embodiment of this application. The content playback server may include a processor 101, a memory 102, and a communications interface 103. The processor 101 is connected to the memory 102 and the communications interface 103 by using a bus 104.

The memory 102 may be configured to store a computer program and a module, and the memory 102 may include a high-speed random access memory, or may include a non-volatile memory such as at least one magnetic disk storage device, a flash memory device, or another volatile solid-state storage device. Correspondingly, the memory 102 may further include a memory controller, to provide access for the processor 101.

The processor 101 is a control center of the recording management server, connects various parts of the entire recording management server by using various interfaces and lines, and executes various functions and data processing of the recording management server by running or executing the computer program and/or the module stored in the memory 102 and invoking data stored in the memory 102. Optionally, the processor 101 may include one or more processing cores.

The communications interface 103 is configured to establish a communication channel, is connected to a communication peer end through the communication channel, and exchanges data with the communication peer end through the communication channel. For example, the communications interface 103 is configured to implement a communication connection between a recording management server and a terminal, a content recording server, the content playback server, or the like.

The processor 101 is configured to invoke program code stored in the memory 102 to perform the following operations:
receiving, by using the communications interface 103, first recording information that carries a uniform resource locator URL2 of a first clip in a first shared file and an identity of the first user account and that is published by the recording management server; and
sending, by using the communications interface 103 and based on the first recording information, the URL2 to a terminal to which the first user account has logged in, where
the first recording information is information published by the recording management server to the content playback server after the recording management server instructs, when a uniform resource locator URL1 of a first private file is not operated in a preset time period, the content recording server to delete the first private file; and
the first private file is a private file generated by recording a first clip in first content by the content recording server according to a received recording request for recording the first clip in the first content.

In an embodiment of the present invention, before receiving, by using the communications interface 103, the first recording information that carries the uniform resource locator URL2 of the first clip in the first shared file and the identity of the first user account and that is published by the recording management server, the processor 101 is further configured to perform the following operation:
receiving, by using the communications interface 103, second recording information that carries the uniform resource locator URL1 of the first private file and the identity of the first user account and that is published by the recording management server.

In an embodiment of the present invention, the processor 101 is further configured to perform the following operation:
receiving, by using the communications interface 103, a first access request that is for the URL2 and that is sent by a first terminal;
identifying, according to the first access request, that the first shared file corresponding to the URL2 is a shared file; and
sending, by using the communications interface 103, a public-to-private request that carries the URL2 to the content recording server, so that the content recording server receives the public-to-private request, generates, according to the public-to-private request, a second private file by copying data corresponding to the first clip in the first shared file, and sends the second private file to the content playback server.

It should be noted that for implementation of each instruction in this embodiment of the present invention, refer to the related descriptions in the method embodiment, and details are not described again in the present invention.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

A sequence of the steps of the method in the embodiments of the present invention may be adjusted, and certain steps may also be combined or removed according to an actual requirement.

The modules in the apparatus in the embodiments of the present invention may be combined, divided, or deleted according to an actual requirement.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A recorded data processing method, wherein the method comprises:
when receiving a first private recording task, sent by a first terminal, for recording a first clip in first content, responding, by a recording management server, to the first private recording task, wherein the first private recording task carries an identity of the first clip in the first content and an identity of a first user account, and is used to request to privately record the first clip in the first content to generate a first private file;
when a uniform resource locator URL1 of the first private file is not operated in a preset time period, generating, by the recording management server, a private-to-public conversion request for the URL1, and sending the request to a first content recording server, wherein the private-to-public conversion request is used to instruct the first content recording server to delete the first private file and send, to the recording management server, a uniform resource locator URL2 of a first clip in a first shared file including the first clip in the first content; and
receiving, by the recording management server, the URL2, and publishing first recording information that carries the URL2 and the identity of the first user account to a content playback server, wherein the first recording information is used for the content playback server to provide the URL2 for a terminal to which the first user account has logged in.

2. The recorded data processing method according to claim 1, wherein the responding, by a recording management server, to the first private recording task comprises:
sending, by the recording management server to a first content recording server, a private recording request for the first private recording task, wherein the private recording request is used to instruct the first content recording server to privately record the first clip in the first content according to the private recording request, generate the first private file comprising the first clip in the first content, and send the uniform resource locator URL 1 of the first private file to the recording management server; and
receiving, by the recording management server, the URL1, and publishing second recording information that carries the URL 1 and the identity of the first user account to the content playback server, wherein the second recording information is used for the content playback server to provide the URL1 for the terminal to which the first user account has logged in.

3. The recorded data processing method according to claim 1 or 2, wherein after the receiving, by the recording management server, the URL2, and publishing first recording information that carries the URL2 and the identity of the first user account to a content playback server, the method further comprises:
receiving, by the recording management server, a uniform resource locator URL3, sent by the first content recording server, of a second private file, wherein the second private file is generated by copying data corresponding to the first clip in the first shared file by the first content recording server according to a received first public-to-private request that carries the URL2; and
publishing, by the recording management server, third recording information that carries the URL3 and the identity of the first user account to the content playback server, wherein the third recording information is used for the content playback server to provide the URL3 for the terminal to which the first user account has logged in.

4. The recorded data processing method according to claim 3, wherein before the publishing, by the recording management server, third recording information that carries the URL3 and the identity of the first user account to the content playback server, the method further comprises:
receiving, by the recording management server, a uniform resource locator URL4, sent by the second content recording server, of a third private file, wherein the third private file is generated by copying the data corresponding to the first clip in the first shared file by the second content recording server according to a received second public-to-private request that carries the URL4; and
when the URL4 meets a first condition, sending a first deletion request that carries the URL4 to the second content recording server, wherein the first deletion request is used to instruct the second content recording server to delete the third private file.

5. The recorded data processing method according to any one of claims 1 to 4, wherein the method further comprises:
determining, by the recording management server based on received private recording tasks for recording a clip in the first content that are respectively sent by a plurality of terminals, that the first content does not include a non-overlapping clip of any one of clips corresponding to the private recording tasks; and
sending, by the recording management server to a third content recording server, a second deletion request for the non-overlapping clip, wherein the second deletion request is used to instruct the third content recording server to delete data that is corresponding to the non-overlapping clip and that is in the first shared file.

6. A recorded data processing method, wherein the method comprises:
when receiving a private recording request that is for a first recording task and that is sent by a recording management server, privately recording, by a content recording server, a first clip in first content to generate a first private file, wherein the first private recording task carries an identity of the first clip in the first content and an identity of a first user account; and
when a uniform resource locator URL1 of the first private file is not operated within a preset time period, receiving, by the content recording server, a private-to-public request that is sent by the recording management server and carries the uniform resource locator URL1 of the first private file, deleting the first private file according to the private-to-public request, and sending a uniform resource locator URL2 that carries the first clip in the first shared file to the recording management server, so that the recording management server publishes first recording information that carries the URL2 and the identity of the first user account to a content playback server, wherein
the first recording information is used for the content playback server to provide the URL2 for a terminal to which the first user account has logged in.

7. The recorded data processing method according to claim 6, wherein after the privately recording a first clip in first content to generate a first private file, and before the receiving a private-to-public request that is sent by the recording management server and carries the uniform resource locator URL1 of the first private file, the method further comprises:
sending, by the content recording server, the uniform resource locator URL1 of the first private file to the recording management server, so that after receiving the URL1, the recording management server publishes second recording information that carries the URL1 and the identity of the first user account to the content playback server, wherein the second recording information is used for the content playback server to provide the URL 1 for the terminal to which the first user account has logged in.

8. The recorded data processing method according to claim 6 or 7, wherein the method further comprises:
receiving, by the content recording server, a public-to-private request that carries the URL2 and that is sent by the content playback server;
generating, according to the public-to-private request, a second private file by copying data corresponding to the first clip in the first shared file; and
sending the second private file to the content playing server.

9. The recorded data processing method according to claim 8, wherein after the generating, according to the public-to-private request, a second private file by copying data corresponding to the first clip in the first shared file, the method further comprises:
sending, by the content recording server, third recording information that carries the URL3 and the identity of the first user account to the recording management server, so that the recording management server publishes the third recording information that carries the URL2 and the identity of the first user account to the content playback server, wherein the third recording information is used for the content playback server to provide the URL3 for the terminal to which the first user account has logged in.

10. A recorded data processing method, wherein the method comprises:
receiving, by a content playback server, first recording information that is published by a recording management server and that carries a uniform resource locator URL2 of a first clip in a first shared file and an identity of the first user account; and
sending, based on the first recording information, the URL2 for a terminal to which the first user account has logged in, wherein
the first recording information is information published by the recording management server to the content playback server after the recording management server instructs, when a uniform resource locator URL1 of a first private file is not operated in a preset time period, the content recording server to delete the first private file; and
the first private file is a private file generated by recording a first clip in first content by the content recording server according to a received recording request for recording the first clip in the first content.

11. The recorded data processing method according to claim 10, wherein before the receiving, by a content playback server, first recording information that is published by a recording management server and that carries a uniform resource locator URL2 of a first clip in a first shared file and an identity of the first user account, the method further comprises:
receiving, by the content playback server, second recording information that carries the uniform resource locator URL1 of the first private file and the identity of the first user account and that is published by the recording management server.

12. The recorded data processing method according to claim 10 or 11, wherein the method further comprises:
receiving, by a content playback server, a first access request that is for the URL2 and that is sent by a first terminal;
identifying, according to the first access request, that the first shared file corresponding to the URL2 is a shared file, and sending a public-to-private request that carries the URL2 to the content recording server, so that the content recording server receives the public-to-private request, generates, according to the public-to-private request, a second private file by copying data corresponding to the first clip in the first shared file, and sends the second private file to the content playback server.

13. A recording management server, wherein the recording management server comprises a processing unit and a communications unit, wherein
the processing unit is configured to: when receiving a first private recording task, sent by a first terminal, for recording a first clip in first content, respond to the first private recording task, wherein the first private recording task carries an identity of the first clip in the first content and an identity of a first user account, and is used to request to privately record the first clip in the first content to generate a first private file; and
when a uniform resource locator URL1 of the first private file is not operated in a preset time period, generate a private-to-public conversion request for the URL1, and send the request to a first content recording server, wherein the private-to-public conversion request is used to instruct the first content recording server to delete the first private file and send, to the recording management server, a uniform resource locator URL2 of a first clip in a first shared file including the first clip in the first content; and
the communications unit is configured to: receive the URL2, and publish first recording information that carries the URL2 and the identity of the first user account to a content playback server, wherein the first recording information is used for the content playback server to provide the URL2 for a terminal to which the first user account has logged in.

14. The recording management server according to claim 13, wherein the communications unit is further configured to:
send, to a first content recording server, a private recording request for the first private recording task, wherein the private recording request is used to instruct the first content recording server to privately record the first clip in the first content according to the private recording request, generate the first private file comprising the first clip in the first content, and send the uniform resource locator URL1 of the first private file to the recording management server; and
receive the URL1, and publish second recording information that carries the URL1 and the identity of the first user account to the content playback server, wherein the second recording information is used for the content playback server to provide the URL1 for the terminal to which the first user account has logged in.

15. The recording management server according to claim 13 or 14, wherein the communications unit is further configured to:
after the communications unit receives the URL2 and publishes the first recording information that carries the URL2 and the identity of the first user account to a content playback server, receive a uniform resource locator URL3, sent by the first content recording server, of a second private file, wherein the second private file is generated by copying data corresponding to the first clip in the first shared file by the first content recording server according to a received first public-to-private request that carries the URL2; and
publish third recording information that carries the URL3 and the identity of the first user account to the content playback server, wherein the third recording information is used for the content playback server to provide the URL3 for the terminal to which the first user account has logged in.

16. The recording management server according to claim 15, wherein the communications unit is further configured to:
before the communications unit publishes the third recording information that carries the URL3 and the identity of the first user account to the content playback server, receive a uniform resource locator URL4, sent by the second content recording server, of a third private file, wherein the third private file is generated by copying the data corresponding to the first clip in the first shared file by the second content recording server according to a received second public-to-private request that carries the URL4; and
when the URL4 meets a first condition, send a first deletion request that carries the URL4 to the second content recording server, wherein the first deletion request is used to instruct the second content recording server to delete the third private file.

17. The recording management server any one of claims 13 to 16, wherein
the processing unit is further configured to: determine, based on received private recording tasks for recording a clip in the first content that are respectively sent by a plurality of terminals, that the first content does not include a non-overlapping clip of any one of clips corresponding to the private recording tasks; and
the communications unit is further configured to: send, to a third content recording server, a second deletion request for the non-overlapping clip, wherein the second deletion request is used to instruct the third content recording server to delete data that is corresponding to the non-overlapping clip and that is in the first shared file.

18. A content recording server, wherein the content recording server comprises a processing unit and a communications unit, wherein
the processing unit is configured to: when receiving a private recording request that is for a first recording task and that is sent by a recording management server, privately record a first clip in first content to generate a first private file, wherein the first private recording task carries an identity of the first clip in the first content and an identity of a first user account; and
the communications unit is configured to: when a uniform resource locator URL1 of the first private file is not operated within a preset time period, receive a private-to-public request that is sent by the recording management server and carries the uniform resource locator URL1 of the first private file, delete the first private file according to the private-to-public request, and send a uniform resource locator URL2 that carries the first clip in the first shared file to the recording management server, so that the recording management server publishes first recording information that carries the URL2 and the identity of the first user account to a content playback server, wherein
the first recording information is used for the content playback server to provide the URL2 for a terminal to which the first user account has logged in.

19. The content recording server according to claim 18, wherein the communications unit is further configured to: after the processing unit privately records the first clip in the first content to generate the first private file, and before the communications unit receive the private-to-public request that is sent by the recording management server and carries the uniform resource locator URL1 of the first private file, send the uniform resource locator URL1 of the first private file to the recording management server, so that after receiving the URL1, the recording management server publishes second recording information that carries the URL1 and the identity of the first user account to the content playback server, wherein the second recording information is used for the content playback server to provide the URL1 for the terminal to which the first user account has logged in.

20. The content recording server according to claim 18 or 19, wherein
the communications unit is further configured to: receive a public-to-private request that carries the URL2 and that is sent by the content playback server;
the processing unit is further configured to: generate, according to the public-to-private request, a second private file by copying data corresponding to the first clip in the first shared file; and
the communications unit is further configured to: send the second private file to the content playing server.

21. The content recording server according to claim 20, wherein the communications unit is further configured to: after the processing unit generates, according to the public-to-private request, the second private file by copying the data corresponding to the first clip in the first shared file, send third recording information that carries the URL3 and the identity of the first user account to the recording management server, so that the recording management server publishes the third recording information that carries the URL2 and the identity of the first user account to the content playback server, wherein the third recording information is used for the content playback server to provide the URL3 for the terminal to which the first user account has logged in.

22. A content playback server, wherein the content playback server comprises a communications unit, and the communications unit is configured to:
receive first recording information that is published by a recording management server and that carries a uniform resource locator URL2 of a first clip in a first shared file and an identity of the first user account; and
send, based on the first recording information, the URL2 for a terminal to which the first user account has logged in, wherein
the first recording information is information published by the recording management server to the content playback server after the recording management server instructs, when a uniform resource locator URL1 of a first private file is not operated in a preset time period, the content recording server to delete the first private file; and
the first private file is a private file generated by recording a first clip in first content by the content recording server according to a received recording request for recording the first clip in the first content.

23. The content playback server according to claim 22, wherein the communications unit is further configured to:
before receiving the first recording information that is published by the recording management server and that carries the uniform resource locator URL2 of the first clip in the first shared file and the identity of the first user account, receive second recording information that carries the uniform resource locator URL1 of the first private file and the identity of the first user account and that is published by the recording management server; and
send, based on the second recording information, the URL1 for a terminal to which the first user account has logged in.

24. The content playback server according to claim 22 or 23, wherein
the communications unit is further configured to receive a first access request that is for the URL2 and that is sent by a first terminal;
the content playback server further includes a processing unit, wherein the processing unit is configured to:
identify, according to the first access request, that the first shared file corresponding to the URL2 is a shared file; and
the communications unit is further configured to: send a public-to-private request that carries the URL2 to the content recording server, so that the content recording server receives the public-to-private request, generates, according to the public-to-private request, a second private file by copying data corresponding to the first clip in the first shared file, and sends the second private file to the content playback server.

25. A recording management server, comprising a processor, a memory, and a communications interface, wherein the processor is connected to the memory and the communications interface, and the processor is configured to invoke program code stored in the memory to perform the recorded data processing method according to any one of claims 1 to 5.

26. A content recording server, comprising a processor, a memory, and a communications interface, wherein the processor is connected to the memory and the communications interface, and the processor is configured to invoke program code stored in the memory to perform the recorded data processing method according to any one of claims 6 to 9.

27. A content playback server, comprising a processor, a memory, and a communications interface, wherein the processor is connected to the memory and the communications interface, and the processor is configured to invoke program code stored in the memory to perform the recorded data processing method according to any one of claims 10 to 12.

28. A content recording system, comprising a recording management server, at least one content recording server, and at least one content playback server, wherein the at least one content recording server comprises a first recording server;
the recording management server is configured to: when receiving a first private recording task, sent by a first terminal, for recording a first clip in first content, respond to the first private recording task, wherein the first private recording task carries an identity of the first clip in the first content and an identity of a first user account, and is used to request to privately record the first clip in the first content to generate a first private file; and when a uniform resource locator URL1 of the first private file is not operated in a preset time period, generate, by the recording management server, a private-to-public request for the URL 1, and send the request to the first content recording server;
the first content recording server is configured to: receive the private-to-public request, delete the first private file according to the private-to-public request, and send, to the recording management server, a uniform resource locator URL2 of a first clip in the first shared file;
the recording management server is further configured to publish first recording information that carries the URL2 and the identity of the first user account to the content playback server; and
the content playback server is configured to provide, based on the first recording information, the URL2 for a terminal to which the first user account has logged in.
